# EUROPEAN PATENT APPLICATION

(11) **EP 2 876 875 A1**
(43) Date of publication of application: **27.05.2015**
(21) Application number: 13820501.8
(22) Date of filing: 04.07.2013
(51) Int. Cl.: H04N 7/00, H04N 13/00

(54) **IMAGE PROCESSING DEVICE AND METHOD**

(30) Priority: 18.07.2012 JP 2012160041
(71) Applicant: Sony Corporation, Tokyo 108-0075 (JP)
(72) Inventor: TAKAHASHI, Yoshitomo, Tokyo 108-0075 (JP)
(74) Representative: Horner, David Richard
(86) International application number: PCT/JP2013/068323
(87) International publication number: WO 2014/013880

(57) **Abstract**

Provided is an image processing device including a control information setting unit that sets control information for controlling whether to use a vector of a base view as a candidate for a prediction vector of a dependent view in motion prediction at a time of encoding a multi-view image, an IVMP processing unit that performs, when the vector view is set as a candidate according to the control information, IVMP processing for setting the vector as a candidate for a prediction vector of a current block of the dependent view, a list generation unit that generates a list of candidates for the prediction vector of the current block, and when there is a candidate generated by the IVMP processing unit and including the vector of the base view, add the candidate to the list, and a transmission unit that transmits the control information.

## Description

### Technical Field

The present disclosure relates to an image processing device and method, and in particular, to an image processing device and method capable of reducing the load of encoding and decoding.

### Background Art

Recently, a device conforming to a Moving Picture Experts Group (MPEG) scheme and the like, in which image information is handled in a digital manner, and, at the time, the image information is compressed through an orthogonal transform, such as a discrete cosine transformation and the like, and motion compensation using redundancy specific to the image information has become widespread in both information distribution at broadcasting stations and the like and information reception at ordinary households for the purpose of highly efficient transmission and accumulation of information.

In particular, MPEG2 (International Organization for Standardization (ISO)/International Electrotechnical Commission (IEC) 13818-2) has been defined as a general-purpose image encoding scheme, and is currently being widely used in a broad range of applications including professional use and consumer use as a standard encompassing both interlaced scanning images and sequential scanning images, as well as standard resolution images and high definition images. By using the MPEG2 compression scheme, for example, in the case of an interlaced scanning image of a standard resolution having 720x480 pixels, a code amount (bit rate) of 4 to 8 Mbps is allocated, and in the case of an interlaced scanning image of a high resolution having 1920×1088 pixels, a code amount (bit rate) of 18 to 22 Mbps is allocated, so that a high compression ratio and satisfactory image quality can be realized.

MPEG2 is mainly intended for high-image-quality encoding appropriate for broadcasting, but is not compatible with an encoding scheme of a lower code amount (bit rate), that is, a higher compression ratio, than that of MPEG1. With the proliferation of mobile terminals, the demand for such an encoding scheme is expected to increase in the future, and to this end, standardization of MPEG4 encoding schemes has been carried out. The specification of the image encoding schemes was confirmed as the international standard ISO/IEC 14496-2 in December 1998.

In addition, recently, standardization of H.26L International Telecommunication Union Telecommunication Standardization Sector (ITU-T) Q6/16 Video Coding Expert Group (VCEG) for the original purpose of image encoding for video conferencing is underway. H.26L involves a larger amount of computation for encoding and decoding than existing coding schemes, such as MPEG2 and MPEG4, but is known to realize higher encoding efficiency. Also, among the activities of MPEG4, a function that is not supported by H.26L has been introduced based on H.26L, and standardization for realizing higher encoding efficiency has been carried out as Joint Model of Enhanced-Compression Video Coding.

According to the standardization schedule, the standard with the name of H.264 and MPEG-4 Part10 (Advanced Video Coding (AVC)) became an international standard in March, 2003.

However, there has been a problem in that setting a macroblock to 16 pixels × 16 pixels is not optimal for a large image frame referred to as ultra high definition (UHD; 4000 pixels × 2000 pixels) which may become an object of a next generation encoding scheme.

Accordingly, the standardization of an encoding scheme called High Efficiency Video Coding (HEVC) is currently underway by Joint Collaboration Team-Video Coding (JCTVC), which is a joint standardization organization of ITU-T and ISO/IEC, for the purpose of further improving the encoding efficiency in comparison with H.264/AVC. With regard to the HEVC standard, a committee draft, which is the specification of an initial draft version, was issued in February 2012 (for example, see Non-Patent Literature 1).

Meanwhile, in existing multi-view image encoding, there is inter-view motion prediction (IVMP) processing for setting a motion vector or a parallax vector (MV) of a base view as a candidate for a prediction vector (PMV) of a dependent view. In this IVMP processing, by selecting a motion vector or a parallax vector (MV) of a block at a position shifted by the amount of parallax, it is possible to obtain a more accurate prediction vector (PMV).

An IVMP tool is a tool for performing the IVMP processing, and adds a vector encoded in a different view as one candidate for a prediction vector of a current block. The candidate vector obtained by the IVMP processing is added to the zeroth index of a candidate list of a prediction vector generated in an advanced MV prediction (AMVP) mode (referred to as an AMVP list).

However, the IVMP tool involves a large amount of throughput, and thus methods of performing encoding without using the tool in order to reduce the load have been considered (for example, see Non-Patent Literature 2).

### Citation List

### Non-Patent Literature

Non-Patent Literature 1: Benjamin Bross, Woo-Jin Han, Jens-Rainer Ohm, Gary J. Sullivan, Thomas Wiegand, "High efficiency video coding (HEVC) text specification draft 6", JCTVC-H1003 ver20, 2012. 2. 17
Non-Patent Literature 2: Yoshiya Yamamoto, Tomohiro Ikai, Tadashi Uchiumi, "3D-CE5.h related: Simplification of AMVP", JCT2-A0014, Joint Collaborative Team on 3D Video Coding Extension Development of ITU-T SG 16 WP 3 and ISO/IEC JTC 1/SC 29/WG 11 1st Meeting: Stockholm, SE, 16-20 July 2012

### Summary of Invention

### Technical Problem

However, even in the method stated in Non-Patent Literature 2, the inter-view motion prediction (IVMP) tool operates at the time of decoding, and thus there is a problem in that the load of decoding increases.

The present disclosure has been made in view of such a situation, and is directed to reducing the load of encoding and decoding.

### Solution to Problem

According to an aspect of the present disclosure, there is provided an image processing device including a control information setting unit configured to set control information for controlling whether or not to use a vector of a base view as a candidate for a prediction vector of a dependent view in motion prediction at a time of encoding a multi-view image, an inter-view motion prediction (IVMP) processing unit configured to perform IVMP processing for setting the vector of the base view as a candidate for a prediction vector of a current block of the dependent view when the vector of the base view is set to be used as a candidate for the prediction vector of the dependent view according to the control information set by the control information setting unit, a list generation unit configured to generate a list of candidates for the prediction vector of the current block, and when there is a candidate generated by the IVMP processing unit and including the vector of the base view, add the candidate to the list, and a transmission unit configured to transmit the control information set by the control information setting unit.

It is possible to further include an unavailability setting unit configured to set the vector of the base view to be not available as the prediction vector of the dependent view when the vector of the base view is set not to be used as a candidate for the prediction vector of the dependent view according to the control information set by the control information setting unit.

It is possible to further include a value setting unit configured to set a predetermined value instead of the candidate including the vector of the base view in the list when the vector of the base view is set not to be used as a candidate for the prediction vector of the dependent view according to the control information set by the control information setting unit.

When a current vector of the current block is a motion vector, the value setting unit may set a representative value of the motion vector instead of the candidate including the vector of the base view in the list.

When a current vector of the current block is a parallax vector, the value setting unit may set a representative value of the parallax vector instead of the candidate including the vector of the base view in the list.

The transmission unit may further transmit the predetermined value set by the value setting unit.

The control information setting unit may set the control information for every predetermined data unit, and the transmission unit may transmit the control information in information corresponding to the predetermined data unit.

The control information setting unit may set the control information for every sequence or every slice, and the transmission unit may transmit the control information in a sequence parameter set or a slice header.

The control information setting unit may set the control information for each of a plurality of levels of hierarchized data units, and the transmission unit may transmit the control information in information corresponding to the respective hierarchical levels for which the control information has been set.

The control information setting unit may set the control information for every sequence and every slice, and the transmission unit may transmit the control information in a sequence parameter set and a slice header.

According to an aspect of the present disclosure, there is provided an image processing method in an information processing method of an information processing device, the image processing method including setting, by the information processing device, control information for controlling whether or not to use a vector of a base view as a candidate for a prediction vector of a dependent view in motion prediction at a time of encoding a multi-view image, performing, by the information processing device, inter-view motion prediction (IVMP) processing for setting the vector of the base view as a candidate for a prediction vector of a current block of the dependent view when the vector of the base view is set to be used as a candidate for the prediction vector of the dependent view according to the set control information, generating, by the information processing device, a list of candidates for the prediction vector of the current block, and when there is a candidate including the vector of the base view, adding the candidate to the list, and transmitting, by the information processing device, the set control information.

According to another aspect of the present disclosure, there is provided an image processing device including a control information acquisition unit configured to acquire control information for controlling whether or not to use a vector of a base view as a candidate for a prediction vector of a dependent view in motion prediction at a time of decoding a multi-view image, an inter-view motion prediction (IVMP) processing unit configured to perform IVMP processing for setting the vector of the base view as a candidate for a prediction vector of a current block of the dependent view when the vector of the base view is set to be used as a candidate for the prediction vector of the dependent view according to the control information acquired by the control information acquisition unit, and a list generation unit configured to generate a list of candidates for the prediction vector of the current block, and when there is a candidate generated by the IVMP processing unit and including the vector of the base view, add the candidate to the list.

It is possible to further include an unavailablity setting unit configured to set the vector of the base view to be unavailable as the prediction vector of the dependent view when the vector of the base view is set not to be used as a candidate for the prediction vector of the dependent view according to the control information acquired by the control information acquisition unit.

It is possible to further include a value setting unit configured to set a predetermined value instead of the candidate including the vector of the base view in the list when the vector of the base view is set not to be used as a candidate for the prediction vector of the dependent view according to the control information acquired by the control information acquisition unit.

When a current vector of the current block is a motion vector, the value setting unit may set a representative value of the motion vector instead of the candidate including the vector of the base view in the list.

When a current vector of the current block is a parallax vector, the value setting unit may set a representative value of the parallax vector instead of the candidate including the vector of the base view in the list.

The control information acquisition unit may further acquire the predetermined value, and the value setting unit may set the predetermined value acquired by the control information acquisition unit in the list.

The control information acquisition unit may acquire the control information set for every predetermined data unit and transmitted in information corresponding the data unit.

The control information acquisition unit may acquire the control information set for each of a plurality of levels of hierarchized data units and transmitted in information corresponding to the respective hierarchical levels for which the control information has been set.

According to another aspect of the present disclosure, there is provided an image processing method of an image processing device, the image processing method including acquiring, by the image processing device, control information for controlling whether or not to use a vector of a base view as a candidate for a prediction vector of a dependent view in motion prediction at a time of decoding a multi-view image, performing, by the image processing device, inter-view motion prediction (IVMP) processing for setting the vector of the base view as a candidate for a prediction vector of a current block of the dependent view when the vector of the base view is set to be used as a candidate for the prediction vector of the dependent view according to the acquired control information, and generating, by the image processing device, a list of candidates for the prediction vector of the current block, and when there is a candidate including the vector of the base view, adding the candidate to the list.

According to an aspect of the present disclosure, in motion prediction at the time of encoding a multi-view image, control information for controlling whether or not to use a vector of a base view as a candidate for a prediction vector of a dependent view is set. When the vector of the base view is set to be used as a candidate for the prediction vector of the dependent view according to the set control information, inter-view motion prediction (IVMP) processing for setting the vector of the base view as a candidate for a prediction vector of a current block of the dependent view is performed to generate a candidate list of the prediction vector of the current block, and when there is a candidate including the vector of the base view, the candidate is added to the list, and the set control information is transmitted.

According to another aspect of the present disclosure, in motion prediction at the time of decoding a multi-view image, control information for controlling whether or not to use a vector of a base view as a candidate for a prediction vector of a dependent view is acquired. When the vector of the base view is set to be used as a candidate for the prediction vector of the dependent view according to the set control information, IVMP process for setting the vector of the base view as a candidate for a prediction vector of a current block of the dependent view is performed to generate a candidate list of the prediction vector of the current block, and when there is a candidate including the vector of the base view, the candidate is added to the list.

### Advantageous Effects of Invention

According to the present disclosure, an image can be processed. In particular, it is possible to reduce the load of encoding and decoding.

### Brief Description of Drawings

[FIG. 1] FIG. 1 is a diagram illustrating examples of an advanced motion vector prediction (AMVP) list.
[FIG. 2] FIG. 2 is a diagram illustrating other examples of an AMVP list.
[FIG. 3] FIG. 3 is a block diagram showing an example of the main configuration of an image encoding device.
[FIG. 4] FIG. 4 is a diagram illustrating an example of syntax.
[FIG. 5] FIG. 5 is a flowchart illustrating an example of the flow of encoding processing.
[FIG. 6] FIG. 6 is a flowchart illustrating an example of the flow of AMVP list generation processing.
[FIG. 7] FIG. 7 is a flowchart, continued from FIG. 6, illustrating the example of the flow of the AMVP list generation processing.
[FIG. 8] FIG. 8 is a block diagram showing an example of the main configuration of an image decoding device.
[FIG. 9] FIG. 9 is a flowchart illustrating an example of the flow of decoding processing.
[FIG. 10] FIG. 10 is a diagram illustrating an example of syntax.
[FIG. 11] FIG. 11 is a diagram illustrating an example of syntax.
[FIG. 12] FIG. 12 is a diagram illustrating an example of syntax.
[FIG. 13] FIG. 13 is a flowchart illustrating another example of the flow of the AMVP list generation processing.
[FIG. 14] FIG. 14 is a flowchart, continued from FIG. 13, illustrating the example of the flow of the AMVP list generation processing.
[FIG. 15] FIG. 15 is a block diagram showing an example of the main configuration of a computer.
[FIG. 16] FIG. 16 is a block diagram showing an example of a schematic configuration of a television.
[FIG. 17] FIG. 17 is a block diagram showing an example of a schematic configuration of a mobile phone.
[FIG. 18] FIG. 18 is a block diagram showing an example of a schematic configuration of a recording/reproduction device.
[FIG. 19] FIG. 19 is a block diagram showing an example of a schematic configuration of an image capturing device.

### Description of Embodiments

Hereinafter, modes (hereinafter referred to as embodiments) for carrying out the present disclosure will be described. Description will be provided in the following order.
1. First embodiment (image encoding device)
2. Second embodiment (image decoding device)
3. Third embodiment (another example of advanced motion vector prediction (AMVP) list generation processing)
4. Fourth embodiment (computer)
5. Fifth embodiment (example application)

### <1. First embodiment>

### [Inter-view motion prediction]

In image encoding, such as Advanced Video Coding (AVC), High Efficiency Video Coding (HEVC), and the like, motion prediction is performed using the correlation of a temporal direction (between frames).

As a processing unit of such prediction processing, blocks of a hierarchical structure, such as a macroblock and a sub-macroblock, are defined in AVC, whereas a coding unit (CU) is defined in HEVC.

A CU is also called a coding tree block (CTB), and is a partial region of an image in a picture unit and plays the same role as a macroblock in AVC. The latter has a fixed size of 16x16 pixels, whereas the size of the former is not fixed and thus is specified in the image compression information in each sequence.

For example, in a sequence parameter set (SPS) included in output encoded data, the largest size (largest coding unit (LCU)) and the smallest size (smallest coding unit (SCU)) of a CU are defined.

Each LCU can be divided into CUs of a smaller size by setting split-flag to 1 unless the size of the CUs is smaller than the size of the SCU. When the value of split_flag is "1," a CU having a size of 2Nx2N is divided into CUs having a size of NxN, which is one level lower in the hierarchy.

Further, a CU is divided into prediction units (PUs) that are regions (partial regions of an image in a picture unit) serving as processing units for intra or inter prediction and is also divided into transform units (TUs) that are regions (partial regions of an image in a picture unit) serving as processing units for an orthogonal transform. Currently, in HEVC, it is possible to use 16x16 and 32x32 orthogonal transforms in addition to 4x4 and 8x8 orthogonal transforms.

In the case of an encoding scheme of defining CUs and performing various kinds of processing in units of the CUs as in the above HEVC, a macroblock in AVC can be considered to correspond to the LCU. However, since CUs have a hierarchical structure, the size of the LCU at the highest level of the hierarchical structure is generally set to be larger than the size of a macroblock of AVC, for example, 128x128 pixels.

From now on, a "region" includes all (or may include any) of the regions described above (e.g., a macroblock, a sub-macroblock, an LCU, a CU, an SCU, a PU, a TU, and the like). Needless to say, a region may include units other than those described above, and units that are unavailable according to the description are appropriately excluded.

Meanwhile, in an existing encoding scheme such as HEVC, motion prediction is performed by way of one of prediction modes. As the prediction modes, a merge mode and an AMVP mode for calculating a differential vector between a current block and a prediction vector and encoding the differential vector are prepared.

Also, in the AMVP mode, vectors of spatially or temporally surrounding blocks become candidates of a prediction vector (PMV), but when a multi-view image is encoded, inter-view motion prediction (IVMP) processing for setting a motion vector or a parallax vector (MV) of a base view as a candidate for a prediction vector (PMV) of a dependent view is additionally prepared. In this IVMP processing, by selecting a motion vector or a parallax vector (MV) of a block at a position shifted by the amount of parallax, it is possible to obtain a more accurate prediction vector (PMV).

An IVMP tool is a tool for performing the IVMP processing, and adds a vector encoded in a different view as one candidate for a prediction vector of a current block. The candidate vector obtained by the IVMP processing is added to the zeroth index of a candidate list (referred to as an AMVP list) of a prediction vector generated in the AMVP mode. Subsequently, the vectors and the like of spatially surrounding blocks of the current block (for example, the vector of a block adjacent to the left of the current block) and temporally surrounding blocks of the current block (for example, a co-located block in a different picture of the same view as the current block) are added to the AMVP list as candidates.

Also, the lengths and the directions of two vectors having AMVP list indices of 0 and 1 are compared, and when the lengths and the directions are identical, pruning processing for selecting either of the two vectors is performed.

However, the IVMP tool involves a large amount of throughput. Therefore, it is preferable not to use the IVMP tool in order to reduce the load of encoding and decoding when there is no need for an IVMP candidate vector.

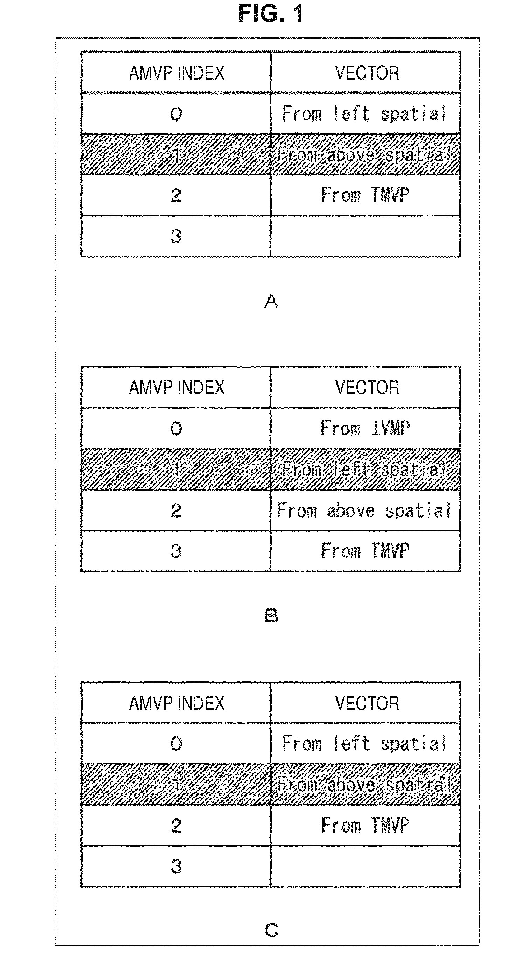

FIG. 1 is a diagram showing examples of the configuration of an AMVP list. When IVMP is not available, the following vectors are moved up. In other words, as shown in A of FIG. 1, the vector of a block positioned on the left of a current block (From left spatial) is set to the vector of index=0, the vector of a block positioned above the current block (From above spatial) is set to the vector of index=1, and the vector of a co-located block in a different picture of the same view of the current block (From temporal motion vector prediction (TMVP)) is set to the vector of index=2.

On the other hand, when IVMP is available, as shown in B of FIG. 1, a candidate vector obtained by IVMP processing (From IVMP) is set to a vector of index=0, the vector of a block positioned on the left of a current block (From left spatial) is set to the vector of index=1, the vector of a block positioned above the current block (From above spatial) is set to the vector of index=2, and the vector of a co-located block in a different picture of the same view of the current block (From TMVP) is set to the vector of index=3.

In this case, pruning processing using the vectors having the indices of 0 and 1 is performed to compare the lengths and the directions of the two vectors. When the lengths and the directions are identical, as shown in C of FIG. 1, the candidate vector obtained by the IVMP processing (From IVMP) is removed from the list, and the following vectors are moved up.

As described above, a vector indicated by index=1 changes depending on the situation. For this reason, in order not to cause inconsistency in the AMVP lists of an encoding side and a decoding side, it is necessary to generate the AMVP lists in the same sequence at the time of encoding and at the time of decoding. In other words, at the time of encoding and at the time of decoding, it is necessary to use the IVMP tool regardless of whether or not a vector obtained by IVMP processing is set as a candidate. Therefore, there is a problem in that the load of encoding and decoding increases.

Accordingly, Non-Patent Literature 2 has proposed a method of performing encoding without using the IVMP tool in order to reduce the load of encoding and decoding.

In this method, a vector obtained by IVMP processing is set to index=0 of an AMVP list. Even when there is no vector obtained by IVMP processing, a zero vector is set to index=0 instead of not-available. In this way, there is no need to determine the availability of IVMP.

Also, a candidate vector obtained by IVMP processing is excluded from targets of pruning processing of candidate vectors for AMVP. In other words, the pruning processing is performed using index=1 and index=2 of the AMVP list.

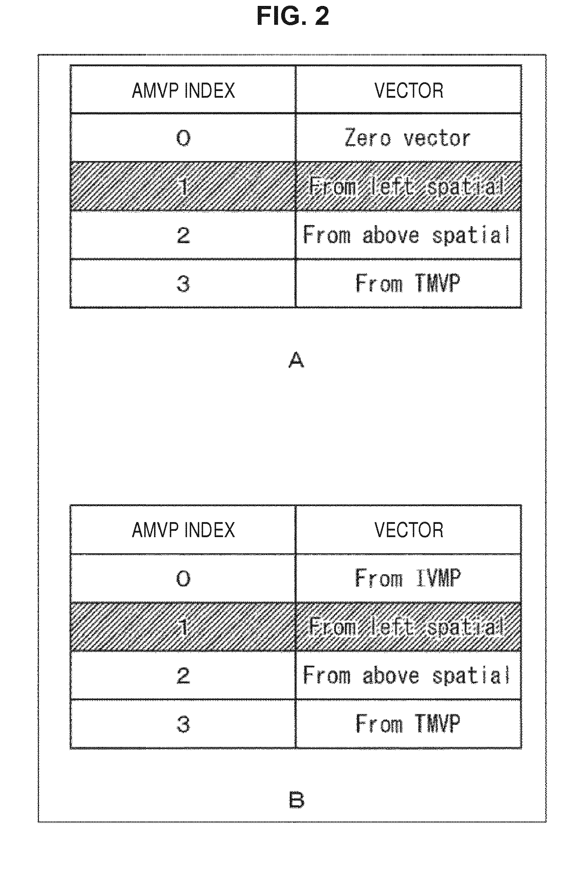

Specifically, when IVMP is not available, as shown in A of FIG. 2, a zero vector is set to the vector of index=0. Therefore, index=1 indicates the same vector at all times.

On the other hand, when IVMP is available, as shown in B of FIG. 2, a candidate vector obtained by IVMP processing is set to the vector of index=0. At this time, pruning processing is performed using the vector of index=1 and the vector of index=2, and thus a vector indicated by index=1 is not affected by the value of an IVMP vector.

Therefore, by setting an AMVP list as described above, a vector indicated by index=1 coincides with that at the time of decoding even if IVMP is ignored at the time of encoding. In other words, by setting an AMVP index to 1 or more and performing encoding, it is possible to skip IVMP processing at the time of encoding.

However, even in the case of the method stated in Non-Patent Literature 2, the IVMP tool operates at the time of decoding. In other words, since a decoding side (decoder side) does not know that AMVP indices of 1 or more are normally transmitted, it is necessary to create a candidate vector by operating the IVMP tool corresponding to index=0. For this reason, there is a problem in that the load of decoding increases.

In addition, although AMVP indices can be transmitted with a small amount of code in ascending order beginning with 0, it is necessary to transmit AMVP indices of 1 or more so that encoding can be performed without IVMP processing. For this reason, there is a problem in that encoding efficiency is unnecessarily degraded.

Accordingly, in order to reduce the load of decoding as well as the load of encoding and also to prevent degradation of encoding efficiency, control information for controlling use of the IVMP tool is transmitted by way of high-level syntax.

As the control information, for example, an IVMP use flag inter_view_mvp_enable_flag for controlling whether or not to use the IVMP tool is used. For example, when the IVMP use flag is 1, both the encoding side (encoder) and the decoding side (decoder) are caused to use the IVMP tool, and when the IVMP use flag is 0, neither the encoding side (encoder) nor the decoding side (decoder) is caused to use the IVMP tool. For example, when the IVMP use flag is 0, IVMP candidate vectors are normally set to be not available.

The IVMP use flag is set by, for example, a user instruction or the like at an arbitrary timing before encoding and decoding (at least before motion prediction). High-level syntax is, for example, an SPS, a slice header, or the like.

In this way, by setting an IVMP use flag to 0, it is possible to skip IVMP processing not only in encoding but also in decoding. Therefore, it is possible to reduce the load of decoding as well as the load of encoding.

In addition, since an AMVP list is created based on the value of the IVMP use flag on the decoding side (decoder), even when an AMVP index is not set to 1 or more on the encoding side (encoder), the AMVP lists of the encoding side (encoder) and the decoding side (decoder) coincide. Therefore, it is unnecessary to set an AMVP index to 1 or more and transmit the AMVP index, and unnecessary degradation of encoding efficiency can be prevented.

### [Image encoding device]

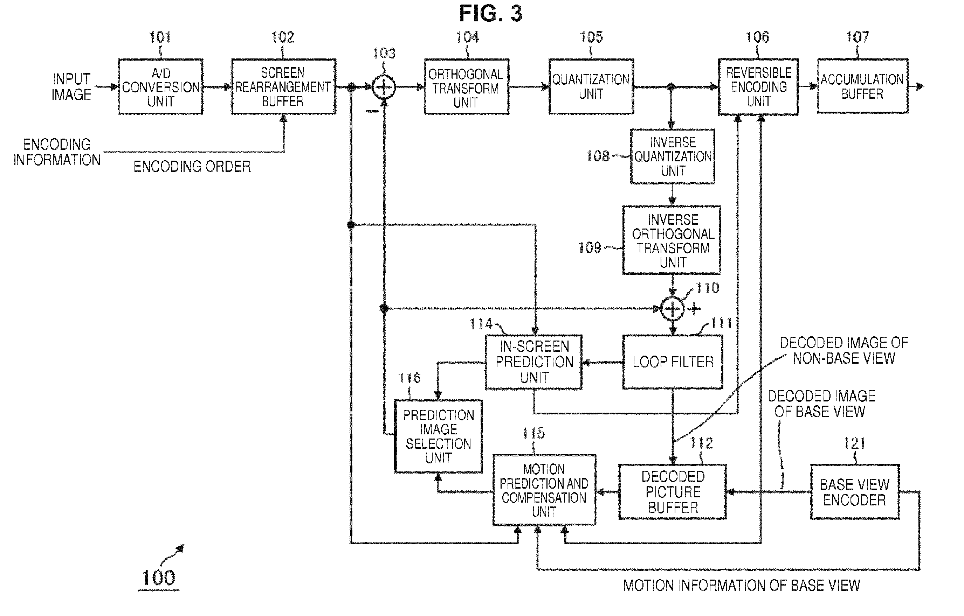

FIG. 3 is a block diagram showing an example of the main configuration of an image encoding device that is an image processing device.

An image encoding device 100 shown in FIG. 3 encodes image data using prediction processing, like in an encoding scheme, for example, AVC, HEVC, or the like. However, the image encoding device 100 encodes a multi-view image including a plurality of views.

As shown in FIG. 3, the image encoding device 100 includes an analog/digital (A/D) conversion unit 101, a screen rearrangement buffer 102, a computing unit 103, an orthogonal transform unit 104, a quantization unit 105, a reversible encoding unit 106, and an accumulation buffer 107. Also, the image encoding device 100 includes an inverse quantization unit 108, an inverse orthogonal transform unit 109, a computing unit 110, a loop filter 111, a decoded picture buffer 112, an in-screen prediction unit 114, a motion prediction and compensation unit 115, a prediction image selection unit 116, and a base view encoder 121.

The A/D conversion unit 101 A/D-converts input image data, supplies the image data (digital data) after the conversion to the screen rearrangement buffer 102, and causes the image data to be stored. The screen rearrangement buffer 102 rearranges a stored image of frames corresponding to a display order in the order of frames for encoding according to a group of picture (GOP), and supplies the image in which the order of frames has been rearranged to the computing unit 103 together with the view identifier (ID) and the picture order count (POC) of the image.

Also, the screen rearrangement buffer 102 supplies the image in which the order of frames has been rearranged to the in-screen prediction unit 114 and the motion prediction and compensation unit 115 together with the view ID and the POC of the image. Here, the view ID is information for identifying a viewpoint, and the POC is information for identifying a time.

The computing unit 103 subtracts a prediction image supplied from the in-screen prediction unit 114 or the motion prediction and compensation unit 115 via the prediction image selection unit 116 from the image read out from the screen rearrangement buffer 102, and outputs the difference information between the prediction image and the image to the orthogonal transform unit 104.

For example, in the case of an image on which intra-encoding, which is encoding using in-screen prediction (intra prediction), is performed, the computing unit 103 subtracts a prediction image supplied from the in-screen prediction unit 114 from the image read out from the screen rearrangement buffer 102. Also, for example, in the case of an image on which inter-encoding, which is encoding using inter-screen prediction (inter prediction), is performed, the computing unit 103 subtracts a prediction image supplied from the motion prediction and compensation unit 115 from the image read out from the screen rearrangement buffer 102.

The orthogonal transform unit 104 performs an orthogonal transform, such as a discrete cosine transform or a Karhunen-Loeve transform, on the difference information supplied from the computing unit 103. A method for the orthogonal transform is arbitrary. The orthogonal transform unit 104 supplies the transform coefficient of the orthogonal transform to the quantization unit 105.

The quantization unit 105 quantizes the transform coefficient supplied from the orthogonal transform unit 104. The quantization unit 105 sets a quantization parameter based on information relating to the target value of the amount of code, and performs the quantization. A method for the quantization is arbitrary. The quantization unit 105 supplies the quantized transform coefficient to the reversible encoding unit 106.

The reversible encoding unit 106 encodes the transform coefficient quantized at the quantization unit 105 using an arbitrary encoding scheme. Also, the reversible encoding unit 106 acquires intra prediction information including information indicating an intra prediction mode and the like from the in-screen prediction unit 114, and acquires inter prediction information including information indicating an inter prediction mode, motion parallax vector information, and the like from the motion prediction and compensation unit 115. In addition, the reversible encoding unit 106 acquires a filter coefficient used at the loop filter 111 and the like.

The reversible encoding unit 106 encodes these various kinds of information using an arbitrary encoding scheme, and sets (multiplexes) the information as a part of the header information of encoded data. The reversible encoding unit 106 supplies the encoded data obtained by the encoding to the accumulation buffer 107, and causes the encoded data to be accumulated.

As the encoding scheme of the reversible encoding unit 106, for example, variable-length coding, arithmetic coding or the like is cited. As variable-length coding, for example, context-adaptive variable length coding (CAVLC) defined in the H.264/AVC scheme or the like is cited. As arithmetic coding, for example, context-adaptive binary arithmetic coding (CABAC) or the like is cited.

The accumulation buffer 107 temporarily holds encoded data supplied from the reversible encoding unit 106. The accumulation buffer 107 outputs the held encoded data to, for example, a recording device (recording medium), a transmission path, or the like in a subsequent stage not shown in the drawing as a bit stream at a predetermined timing. In other words, the various kinds of encoded information are supplied to the decoding side.

The transform coefficient quantized at the quantization unit 105 is also supplied to the inverse quantization unit 108. The inverse quantization unit 108 performs inverse quantization on the quantized transform coefficient using a method corresponding to the quantization performed by the quantization unit 105. The method for the inverse quantization may be any method corresponding to the quantization processing by the quantization unit 105. The inverse quantization unit 108 supplies the obtained transform coefficient to the inverse orthogonal transform unit 109.

The inverse orthogonal transform unit 109 performs an inverse orthogonal transform on the transform coefficient supplied from the inverse quantization unit 108 using a method corresponding to the orthogonal transform processing by the orthogonal transform unit 104. The method for the inverse orthogonal transform may be any method corresponding to the orthogonal transform processing by the orthogonal transform unit 104. The output subjected to the inverse orthogonal transform (locally restored difference information) is supplied to the computing unit 110.

The computing unit 110 obtains a locally reconfigured image (hereinafter referred to as a reconfigured image) by adding the prediction image supplied from the in-screen prediction unit 114 or the motion prediction and compensation unit 115 via the prediction image selection unit 116 to an inverse orthogonal transform result supplied from the inverse orthogonal transform unit 109, that is, the locally restored difference information. The reconfigured image is supplied to the loop filter 111.

The loop filter 111 includes a deblocking filter, an adaptive loop filter, and the like, and appropriately performs filter processing on the decoded image supplied from the computing unit 110. For example, the loop filter 111 removes the block distortion of the decoded image by performing deblocking filter processing on the decoded image. Also, for example, the loop filter 111 performs loop filter processing on the result of the deblocking filter processing (decoded image from which the block distortion has been removed) using the Wiener filter, thereby improving image quality.

In addition, the loop filter 111 may perform arbitrary filter processing on the decoded image. Also, the loop filter 111 can supply information, such as a filter coefficient used in the filter processing and the like, to the reversible encoding unit 106 according to necessity, and cause the information to be encoded.

The loop filter 111 supplies a filter processing result (hereinafter referred to as a decoded image) to the decoded picture buffer 112. Also, the loop filter 111 supplies the reconfigured image supplied from the computing unit 110 to the in-screen prediction unit 114.

The decoded picture buffer 112 stores each decoded image supplied from the loop filter 111. Also, the decoded picture buffer 112 stores the view ID and the POC of the image.

At a predetermined timing or based on a request from the outside, such as the motion prediction and compensation unit 115 or the like, the decoded picture buffer 112 supplies the stored decoded image (and the view ID and the POC of the image) to the motion prediction and compensation unit 115.

When images of surrounding regions (surrounding blocks) positioned around a processing target region (current block) are acquired from the loop filter 111, the in-screen prediction unit 114 performs intra prediction of generating a prediction image, basically using prediction units (PUs) as processing units. The in-screen prediction unit 114 performs the intra prediction in a plurality of modes (intra prediction modes) prepared in advance.

The in-screen prediction unit 114 generates prediction images in all intra prediction modes serving as candidates, evaluates the cost function values of the respective prediction images using the input image supplied from the screen rearrangement buffer 102, and selects an optimal mode. Upon selecting the optimal intra prediction mode, the in-screen prediction unit 114 supplies a prediction image generated in the optimal mode to the prediction image selection unit 116.

Also, the in-screen prediction unit 114 appropriately supplies intra prediction information including information relating to intra prediction, such as the optimal intra prediction mode and the like, to the reversible encoding unit 106, and causes the intra prediction information to be encoded.

The base view encoder 121 encodes the base view of the multi-view image. The base view encoder 121 supplies the decoded image of the base view to the decoded picture buffer 112 and causes the decoded image to be stored. In the decoded picture buffer 112, the decoded image of a non-base view supplied from the loop filter 111 is further stored.

The base view encoder 121 supplies motion information of the base view to the motion prediction and compensation unit 115.

The motion prediction and compensation unit 115 performs inter prediction (motion prediction and parallax prediction) using the decoded image acquired from the decoded picture buffer 112 and the motion information of the base view acquired from the base view encoder 121.

The motion prediction and compensation unit 115 performs compensation processing according to a detected vector (motion vector or parallax vector) and generates a prediction image (inter prediction image information). The motion prediction and compensation unit 115 performs such inter prediction (inter-screen prediction) in a plurality of modes (inter prediction modes) prepared in advance.

The motion prediction and compensation unit 115 generates prediction images in all inter prediction modes serving as candidates, evaluates the cost function values of the respective prediction images, and selects an optimal mode. Upon selecting the optimal inter prediction mode, the motion prediction and compensation unit 115 supplies a prediction image generated in the optimal mode to the prediction image selection unit 116.

Also, the motion prediction and compensation unit 115 supplies inter prediction information including information relating to inter prediction, such as the optimal inter prediction mode and the like, to the reversible encoding unit 106, and causes the inter prediction information to be encoded.

The prediction image selection unit 116 selects the supply source of a prediction image supplied to the computing unit 103 and the computing unit 110. For example, in the case of intra encoding, the prediction image selection unit 116 selects the in-screen prediction unit 114 as the supply source of the prediction image, and supplies the prediction image supplied from the in-screen prediction unit 114 to the computing unit 103 and the computing unit 110. Also, for example, in the case of inter encoding, the prediction image selection unit 116 selects the motion prediction and compensation unit 115 as the supply source of the prediction image, and supplies the prediction image supplied from the motion prediction and compensation unit 115 to the computing unit 103 and the computing unit 110.

### [IVMP processing control]

As described above, the AMVP mode is prepared as one inter prediction mode. In the AMVP mode, as described above, the image encoding device 100 sets an IVMP use flag as control information for controlling use of the IVMP tool, performs the processing of the AMVP mode based on the IVMP use flag, and transmits the IVMP use flag to the decoding side.

The reversible encoding unit 106 sets the IVMP use flag. The IVMP use flag can be set based on arbitrary information. For example, the reversible encoding unit 106 sets the IVMP use flag based on information supplied from the outside, such as a user instruction or the like.

The reversible encoding unit 106 can control use of the IVMP tool for every arbitrary data unit. In other words, the reversible encoding unit 106 can set an IVMP use flag for every arbitrary data unit. Also, the reversible encoding unit 106 can control use of the IVMP tool for each of a plurality of levels of hierarchized data units. In other words, the reversible encoding unit 106 can set these IVMP use flags for the plurality of levels of hierarchized data units.

The reversible encoding unit 106 supplies the set IVMP use flag to the accumulation buffer 107, and causes the set IVMP use flag to be transmitted to the decoding side (decoder). The reversible encoding unit 106 includes the IVMP use flag in, for example, the bit stream of encoded data that the image encoding device 100 has generated by encoding the image, and causes the IVMP use flag to be transmitted to the decoding side.

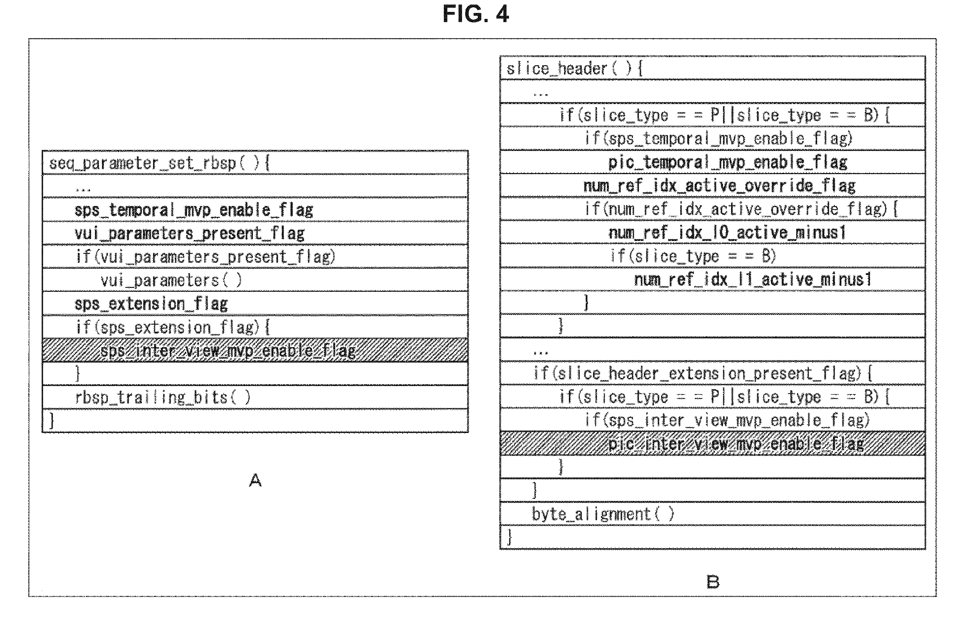

At this time, the reversible encoding unit 106 may transmit an IVMP use flag that is set for every predetermined data unit in information corresponding to the data unit. A of FIG. 4 shows an example of the syntax of an SPS. For example, as the example shown in A of FIG. 4, the reversible encoding unit 106 may set an IVMP use flag for every sequence, include the set IVMP use flag sps_inter_view_mvp_enable_flag in the SPS, and cause the IVMP use flag to be transmitted.

In this case, in the processing of the AMVP mode, the motion prediction and compensation unit 115 acquires the IVMP use flag sps_inter_view_mvp_enable_flag of the SPS of a sequence including a current block that is a processing target from the reversible encoding unit 106, and controls execution of the IVMP processing of the current block that is the processing target based on the value of the IVMP use flag sps_inter_view_mvp_enable_flag.

In other words, when the value of the IVMP use flag sps_inter_view_mvp_enable_flag is 1, the motion prediction and compensation unit 115 operates the IVMP tool and executes the IVMP processing. When there is a candidate vector obtained by the IVMP processing, the motion prediction and compensation unit 115 adds the candidate vector to the vector of index=0 of an AMVP list. Also, when there is no candidate vector, the motion prediction and compensation unit 115 searches the vectors of spatially surrounding blocks and temporally surrounding blocks of the current block without adding a candidate vector obtained by the IVMP processing to the AMVP list.

On the other hand, when the value of the IVMP use flag sps_inter_view_mvp_enable_flag is 0, the motion prediction and compensation unit 115 sets a vector from IVMP to be not available without operating the IVMP tool, that is, without executing the IVMP processing. In other words, the motion prediction and compensation unit 115 searches the vectors of spatially surrounding blocks and temporally surrounding blocks of the current block without adding a candidate vector obtained by the IVMP processing to the AMVP list.

In this way, by transmitting an IVMP use flag, it is possible to control IVMP processing in the same way based on the IVMP use flag on both an encoding side and a decoding side. Therefore, by setting the IVMP use flag to 0, the image encoding device 100 can enable not only the encoding side but also the decoding side to generate an AMVP list without operating the IVMP tool (skipping IVMP processing). In other words, the image encoding device 100 can reduce not only the load of encoding but also the load of decoding.

In addition, without setting an AMVP index to 1 or more and transmitting the AMVP index, it is possible to control IVMP processing in the same way on both the encoding side and the decoding side based on the IVMP use flag, and thus the image encoding device 100 can improve encoding efficiency.

B of FIG. 4 shows an example of the syntax of a slice header. For example, as the example shown in B of FIG. 4, when an IVMP use flag sps_inter_view_mvp_enable_flag set for every sequence is 1, the reversible encoding unit 106 may further set an IVMP use flag pic_inter_view_mvp_enable_flag for every slice, include the IVMP use flag set for every slice in a slice header slice_header, and cause the IVMP use flag to be transmitted.

In this case, in the processing of the AMVP mode, the motion prediction and compensation unit 115 acquires the IVMP use flag sps_inter_view_mvp_enable_flag of the SPS of the sequence including the current block that is a processing target and the IVMP use flag pic_inter_view_mvp_enable_flag of the slice header slice_header of a slice including the current block from the reversible encoding unit 106, and controls execution of the IVMP processing of the current block based on the values of the IVMP use flags sps_inter_view_mvp_enable_flag and pic_inter_view_mvp_enable_flag.

In this way, by setting IVMP use flags for a plurality of levels of hierarchized data units, the image encoding device 100 can control execution of IVMP processing more adaptively.

In FIG. 4, it has been described that an IVMP use flag is set for every sequence and every slice, but an IVMP use flag may be set only for every slice. In this case, an IVMP use flag is only stored in a slice header.

As described above, an IVMP use flag can be set for every arbitrary data unit. Therefore, an IVMP use flag may be set for every data unit other than a sequence and a slice shown in FIG. 4. For example, an IVMP use flag may be set for every picture and every block (LCU, CU, PU, TU, or the like). Also, the case in which IVMP use flags are set for a plurality of hierarchical levels is not limited to the examples of FIG. 4. For example, an IVMP use flag may be set for every sequence and every picture. Also, for example, an IVMP use flag may be set for every sequence, every picture and every slice.

It has been described above that an IVMP use flag is included in information corresponding to a set data unit of the IVMP use flag, but an IVMP use flag may be stored at an arbitrary position in a bit stream. For example, an IVMP use flag set for every slice may be stored in an SPS in an integrated manner. However, in this case, it is necessary to specify which piece of data each IVMP use flag corresponds to.

It has been described above that control is made to use the IVMP tool when an IVMP use flag is 1, and not to use the IVMP tool when the IVMP use flag is 0, but the value of an IVMP use flag as control information for executing IVMP processing is arbitrary. For example, control may be made to use the IVMP tool when an IVMP use flag is 0, and not to use the IVMP tool when the IVMP use flag is 1. Needless to say, the control information may be information of a plurality of bits.

### [Flow of encoding processing]

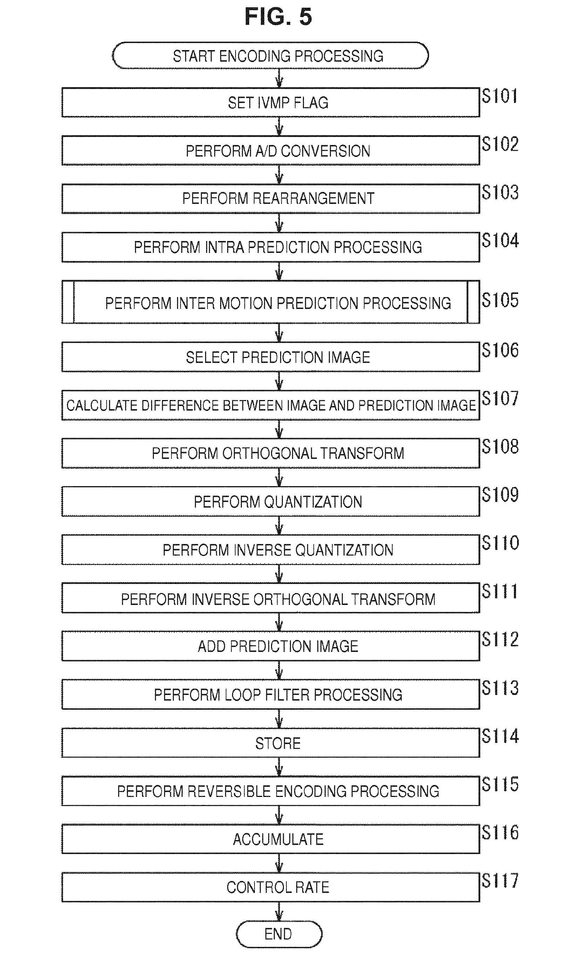

Next, the flow of each processing executed by the image encoding device 100 described above will be described. First, with reference to the flowchart of FIG. 5, an example of the flow of encoding processing will be described.

When encoding processing is started, in step S101, the reversible encoding unit 106 sets an IVMP use flag based on, for example, a user instruction or the like.

In step S102, the A/D conversion unit 101 A/D converts an input image. In step S103, the screen rearrangement buffer 102 stores the A/D converted image and performs rearrangement from the display order of respective pictures to an encoding order.

In step S104, the in-screen prediction unit 114 performs intra prediction processing. In step S105, the motion prediction and compensation unit 115 performs inter motion prediction processing. In step S106, the prediction image selection unit 116 selects either of a prediction image generated by the intra prediction and a prediction image generated by the inter prediction.

In step S107, the computing unit 103 calculates a difference between the image rearranged in the processing of step S103 and the prediction image selected in the processing of step S106 (generates a difference image). The generated difference image has a reduced amount of data compared to the original image. Therefore, in comparison with the case of encoding the image as it is, it is possible to compress the amount of data.

In step S108, the orthogonal transform unit 104 performs an orthogonal transform on the difference image generated in the processing of step S107. Specifically, an orthogonal transform, such as a discrete cosine transform, a Karhunen-Loeve transform, or the like, is performed, and an orthogonal transform coefficient is output. In step S109, the quantization unit 105 quantizes the orthogonal transform coefficient obtained in the processing of step S108.

The difference image quantized in the processing of step S109 is locally decoded in the following manner. That is to say, in step S110, the inverse quantization unit 108 performs inverse quantization on the orthogonal transform coefficient generated and quantized in the processing of step S109 (also referred to as a quantization coefficient) according to a characteristic corresponding to a characteristic of the quantization unit 105. In step S111, the inverse orthogonal transform unit 109 performs an inverse orthogonal transform on the orthogonal transform coefficient obtained in the processing of step S110 according to the characteristic corresponding to the characteristic of the quantization unit 105. In this way, the difference image is restored.

In step S112, the computing unit 110 adds the prediction image selected in step S106 to the difference image generated in step S111 and generates a decoded image (reconfigured image) that has been locally decoded. In step S113, the loop filter 111 appropriately performs loop filter processing including deblocking filter processing, adaptive loop filter processing, and the like on the reconfigured image obtained in the processing of step S112 and generates a decoded image.

In step S114, the decoded picture buffer 112 stores the decoded image generated in the processing of step S113.

In step S115, the reversible encoding unit 106 encodes the orthogonal transform coefficient quantized in the processing of step S109. In other words, reversible encoding, such as variable-length coding, arithmetic coding, or the like, is performed on the difference image. Also, the reversible encoding unit 106 encodes information relating to the prediction, information relating to the quantization, information relating to the filter processing, and the like, and adds the encoded information to a bit stream.

In addition, the reversible encoding unit 106 stores the IVMP use flag set in step S101 at a predetermined position, for example, an SPS, a slice header, or the like.

In step S116, the accumulation buffer 107 accumulates the bit stream obtained in the processing of step S115. The encoded data accumulated in the accumulation buffer 107 is appropriately read out and transmitted to the decoding side via a transmission path or a recording medium.

In step S 117, the quantization unit 105 controls the rate of a quantization operation based on the amount of code (the amount of generated code) of the encoded data accumulated in the accumulation buffer 107 in the processing of step S116 so that no overflow or underflow occurs.

When the processing of step S117 is finished, the encoding processing is finished.

### [Flow of AMVP list generation processing]

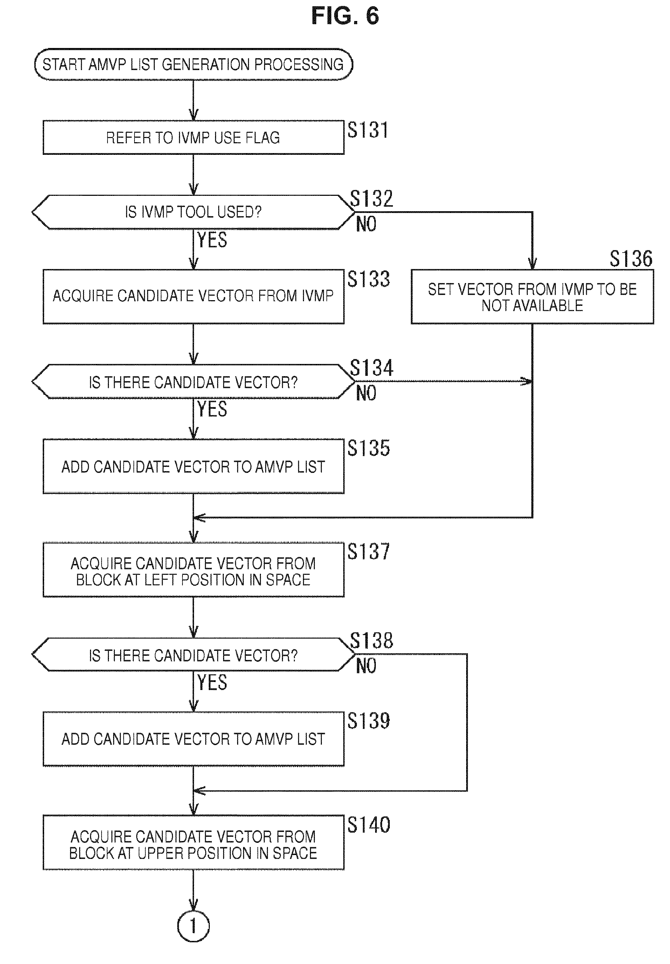

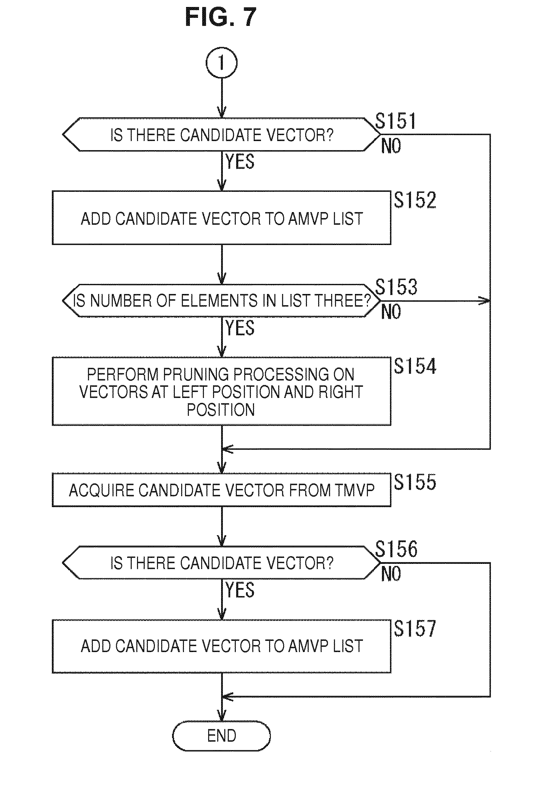

Next, the flow of an AMVP list generation processing executed in the inter motion prediction processing executed in step S105 of FIG. 5 will be described with reference to the flowcharts of FIG. 6 and FIG. 7.

When AMVP list generation processing is started, in step S131, the motion prediction and compensation unit 115 refers to an IVMP use flag set by the reversible encoding unit 106.

In step S132, the motion prediction and compensation unit 115 determines whether or not to use the IVMP tool based on the value of the IVMP use flag referred to in step S131. For example, when the value of the IVMP use flag is 1 and it is determined to use the IVMP tool, the process proceeds to step S133.

In step S133, the motion prediction and compensation unit 115 performs IVMP processing using the IVMP tool, and acquires a candidate vector according to the IVMP.

In step S134, the motion prediction and compensation unit 115 determines whether or not there is a candidate vector obtained in the processing of step S133 from the IVMP.

When it is determined that there is a candidate vector, the process proceeds to step S135. In step S135, the motion prediction and compensation unit 115 adds the candidate vector obtained in the processing of step S133 to index=0 of an AMVP list.

When the processing of step S135 is finished, the process proceeds to step S 137. Also, when it is determined in step S 134 that there is no candidate vector, the process proceeds to step S137.

For example, when the value of the IVMP use flag is 0 and it is determined in step S132 to use the IVMP tool, the process proceeds to step S136. In step S136, the motion prediction and compensation unit 115 sets a vector from IVMP to be not available. When the processing of step S136 is finished, the process proceeds to step S 137.

In step S137, the motion prediction and compensation unit 115 acquires a candidate vector from a block at a left position in a space (From left spatial).

In step S138, the motion prediction and compensation unit 115 determines whether or not there is a candidate vector of the block at the left position in the space.

When it is determined that there is a candidate vector, the process proceeds to step S139. In step S139, the motion prediction and compensation unit 115 adds the candidate vector to the AMVP list.

When the processing of step S139 is finished, the process proceeds to step S140. Also, when it is determined in step S138 that there is no candidate vector of the block at the left position in the space, the process proceeds to step S140. In step S140, the motion prediction and compensation unit 115 acquires a candidate vector from a block at an upper position in the space (From above spatial).

When the processing of step S140 is finished, the process proceeds to step S151 of FIG. 7.

In step S151 of FIG. 7, the motion prediction and compensation unit 115 determines whether or not there is a candidate vector of the block at the upper position in the space.

When it is determined that there is a candidate vector, the process proceeds to step S152. In step S152, the motion prediction and compensation unit 115 adds the candidate vector to the AMVP list.

When the processing of step S152 is finished, the process proceeds to step S153. In step S153, the motion prediction and compensation unit 115 determines whether or not the number of elements in the list is three.

When the number of elements in the list is three, the process proceeds to step S154. In step S154, the motion prediction and compensation unit 115 performs pruning processing on vectors at the left position and a right position.

When the processing of step S154 is finished, the process proceeds to step S155. Also, when it is determined in step S153 that the number of elements in the list is not three, the process proceeds to step S155. Further, when it is determined in step S151 that there is no candidate vector of the block at the upper position in the space, the process proceeds to step S155.

In step S155, the motion prediction and compensation unit 115 performs TMVP processing using the vector of a co-located block in a different picture of the same view as a current block as a candidate, and acquires a candidate vector (From TMVP) from the TMVP.

In step S156, the motion prediction and compensation unit 115 determines whether or not there is a TMVP candidate vector.

When it is determined that there is a candidate vector, the process proceeds to step S157. In step S157, the motion prediction and compensation unit 115 adds the candidate vector to the AMVP list.

When the processing of step S157 is finished, the AMVP list generation processing is finished. Also, when it is determined in step S156 that there is no candidate vector, the AMVP list generation processing is finished.

The motion prediction and compensation unit 115 searches for a prediction vector using the AMVP list generated as described above. In this way, the motion prediction and compensation unit 115 can control execution of IVMP processing according to the value of an IVMP use flag. In other words, by executing each processing as described above, the image encoding device 100 can reduce not only the load of encoding but also the load of decoding, and can also improve encoding efficiency.

### <2. Second embodiment>

### [Image decoding device]

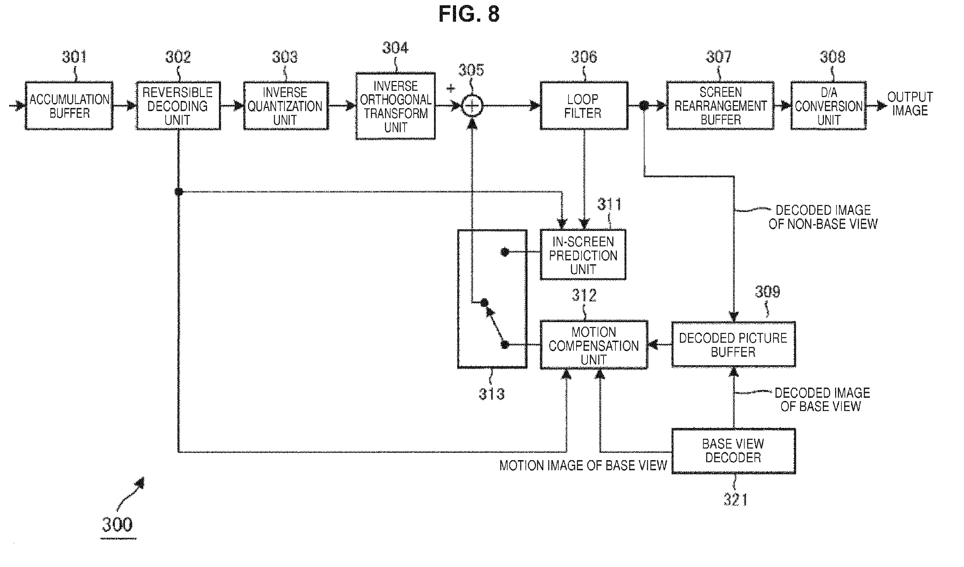

Next, a decoding side (decoder) will be described. FIG. 8 is a block diagram showing an example of the main configuration of an image decoding device that is an image processing device. An image decoding device 300 shown in FIG. 8 is a device corresponding to the image encoding device 100 of FIG. 3. In other words, the image decoding device 300 decodes encoded data (bit stream) that the image encoding device 100 generates by encoding a multi-view image using a decoding method corresponding to the encoding method of the image encoding device 100, and obtains a decoded image of multiple viewpoints.

As shown in FIG. 8, the image decoding device 300 includes an accumulation buffer 301, a reversible decoding unit 302, an inverse quantization unit 303, an inverse orthogonal transform unit 304, a computing unit 305, a loop filter 306, a screen rearrangement buffer 307, and a D/A conversion unit 308. Also, the image decoding device 300 includes a decoded picture buffer 309, an in-screen prediction unit 311, a motion compensation unit 312, and a selection unit 313.

Further, the image decoding device 300 includes a base view decoder 321.

The accumulation buffer 301 accumulates received encoded data, and supplies the encoded data to the reversible decoding unit 302 at a predetermined timing. The reversible decoding unit 302 decodes information that has been encoded by the reversible encoding unit 106 of FIG. 3 and supplied by the accumulation buffer 301 using a scheme corresponding to the encoding scheme of the reversible encoding unit 106. The reversible decoding unit 302 supplies the quantized coefficient data of a difference image obtained by the decoding to the inverse quantization unit 303.

In addition, with reference to information relating to an optimal prediction mode obtained by decoding the encoded data, the reversible decoding unit 302 determines whether an intra prediction mode or an inter prediction mode has been selected as the optimal prediction mode. Based on the result of the determination, the reversible decoding unit 302 supplies the information relating to the optimal prediction mode to the in-screen prediction unit 311 or the motion compensation unit 312. In other words, for example, when an intra prediction mode has been selected as the optimal prediction mode in the image encoding device 100, intra prediction information and the like that is information relating to the optimal prediction mode is supplied to the in-screen prediction unit 311. Also, for example, when an inter prediction mode has been selected as the optimal prediction mode in the image encoding device 100, inter prediction information and the like that is information relating to the optimal prediction mode is supplied to the motion prediction unit 312.

The inverse quantization unit 303 performs inverse quantization on the quantized coefficient data, which has been obtained through decoding by the reversible decoding unit 302, using a scheme corresponding to the quantization scheme of the quantization unit 105 of FIG. 3, and supplies obtained coefficient data to the inverse orthogonal transform unit 304. The inverse orthogonal transform unit 304 performs an inverse orthogonal transform on the coefficient data supplied from the inverse quantization unit 303 using a scheme corresponding to the orthogonal transform scheme of the orthogonal transform unit 104 of FIG. 3. By the inverse orthogonal transform processing, the inverse orthogonal transform unit 304 obtains a difference image corresponding to a difference image on which an orthogonal transform has not yet been performed in the image encoding device 100.

The difference image obtained through the inverse orthogonal transform is supplied to the computing unit 305. Also, a prediction image is supplied to the computing unit 305 from the in-screen prediction unit 311 or the motion compensation unit 312 via the selection unit 313.

The computing unit 305 adds the difference image and the prediction image, and obtains a reconfigured image corresponding to an image from which the prediction image has not yet been subtracted by the computing unit 103 of the image encoding device 100. The computing unit 305 supplies the reconfigured image to the loop filter 306.

The loop filter 306 appropriately performs loop filter processing including deblocking filter processing, adaptive loop filter processing, and the like on the supplied reconfigured image, and generates a decoded image. For example, the loop filter 306 removes block distortion by performing deblocking filter processing on the reconfigured image. Also, for example, the loop filter 306 performs loop filter processing on the result of the deblocking filter processing (reconfigured image from which the block distortion has been removed) using the Wiener filter, thereby improving image quality.

The type of the filter processing performed by the loop filter 306 is arbitrary, and filter processing other than that described above may also be performed. In addition, the loop filter 306 may perform the filter processing using a filter coefficient supplied from the image encoding device 100 of FIG. 3

The loop filter 306 supplies the decoded image that is a filter processing result to the screen rearrangement buffer 307 and the decoded picture buffer 309. Also, the loop filter 306 supplies the output of the computing unit 305 (reconfigured image) to the in-screen prediction unit 311 without performing filter processing. For example, the in-screen prediction unit 311 uses the pixel values of pixels included in the image as the pixels values of surrounding pixels.

The screen rearrangement buffer 307 rearranges the supplied decoded image. In other words, the order of frames rearranged for the encoding order by the screen rearrangement buffer 102 of FIG. 3 is rearranged in the original display order. The D/A conversion unit 308 D/A-converts the decoded image supplied from the screen rearrangement buffer 307, outputs the D/A-converted decoded image to a display not shown in the drawing, and causes the D/A-converted decoded image to be displayed.

The decoded picture buffer 309 stores the supplied decoded image (and the view ID and the POC of the image). Also, the decoded picture buffer 309 supplies the stored decoded image (and also the view ID and the POC of the image) to the motion compensation unit 312 at a predetermined timing or based on a request from the outside, such as the in-screen prediction unit 311, the motion compensation unit 312, or the like.

The in-screen prediction unit 311 performs basically the same processing as the in-screen prediction unit 114 of FIG. 3. However, the in-screen prediction unit 311 performs intra prediction on only a region whose prediction image has been generated by intra prediction at the time of encoding. For every region of prediction processing units, the in-screen prediction unit 311 supplies a generated prediction image to the computing unit 305 via the selection unit 313.

The motion compensation unit 312 performs motion compensation based on the inter prediction information supplied from the reversible decoding unit 302, and generates a prediction image. Based on the inter prediction information supplied from the reversible decoding unit 302, the motion compensation unit 312 performs motion parallax compensation on only a region on which inter prediction has been performed at the time of encoding. For every region of the prediction processing units, the motion compensation unit 312 supplies a generated prediction image to the computing unit 305 via the selection unit 313.

The selection unit 313 supplies the prediction image supplied from the in-screen prediction unit 311 or the prediction image supplied from the motion compensation unit 312 to the computing unit 305.

The base view decoder 321 encodes a base view. The base view decoder 321 supplies the decoded image of the base view to the decoded picture buffer 309, and causes the decoded image to be stored. In the decoded picture buffer 309, the decoded image of a non-base view supplied from the loop filter 306 is further stored.

Also, the base view decoder 321 supplies the motion information of the base view to the motion compensation unit 312. The motion compensation unit 312 generates a prediction vector referring to a block in a view direction using the decoded image acquired from the decoded picture buffer 309 and the motion information of the base view acquired from the base view decoder 321.

### [IVMP processing control]

The image decoding device 300 acquires an IVMP use flag supplied from the image encoding device 100 as control information for controlling use of the IVMP tool, and performs the processing of the AMVP mode based on the value of the IVMP use flag, as in the case of encoding.

The reversible decoding unit 302 acquires the IVMP use flag supplied from the image encoding device 100. For example, the reversible decoding unit 302 refers to a predetermined position, such as an SPS, a slice header, or the like, and acquires the IVMP use flag stored at the position. The reversible decoding unit 302 supplies the acquired IVMP use flag to the motion compensation unit 312.

At the time of generating an AMVP list in inter prediction processing for decoding, the motion compensation unit 312 controls execution of IVMP processing (use of the IVMP tool) for a current block, which is a processing target, based on the value of the supplied IVMP use flag.

In this way, the motion compensation unit 312 can control execution of IVMP processing (use of the IVMP tool), as in the case of encoding in the image encoding device 100. In other words, the motion compensation unit 312 can generate an AMVP list that is the same as an AMVP list generated by the motion compensation unit 115.

Therefore, the image decoding device 300 can skip IVMP processing like the image encoding device 100, and can reduce the load of decoding. Also, the image decoding device 300 can correctly decode a bit stream supplied from the image encoding device 100. In other words, it is unnecessary to set an AMVP index to 1 or more and transmit the AMVP index. Therefore, the image decoding device 300 can realize prevention of a reduction in encoding efficiency.

### [Flow of decoding processing]

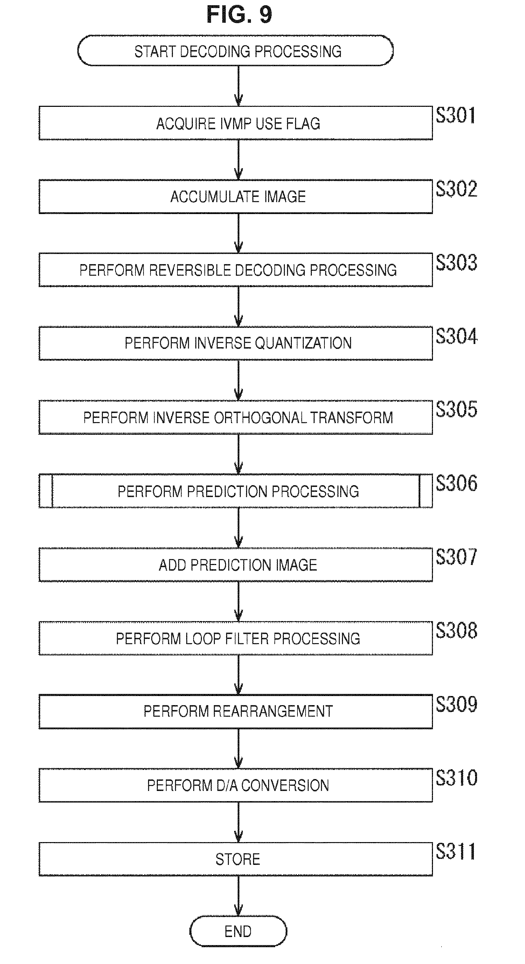

Next, an example of the flow of decoding processing executed by the image decoding device 300 described above will be described with reference to the flowchart of FIG. 9.

When decoding processing is started, in step S301, the reversible decoding unit 302 acquires a received bit stream via the accumulation buffer 301, and acquires an IVMP use flag stored at a predetermined position, for example, an SPS, a slice header, or the like, in the bit stream.

In step S302, the accumulation buffer 301 accumulates the received bit stream. In step S303, the reversible decoding unit 302 decodes the bit stream (encoded difference image information) supplied from the accumulation buffer 301. At this time, various kinds of information other than the difference image information included in the bit stream, such as intra prediction information, inter prediction information, or the like, are also decoded.

In step S304, the inverse quantization unit 303 performs inverse quantization on a quantized orthogonal transform coefficient obtained in the processing of step S303. In step S305, the inverse orthogonal transform unit 304 performs an inverse orthogonal transform on the orthogonal transform coefficient that has been subjected to the inverse quantization in step S304.

In step S306, the in-screen prediction unit 311 or the motion compensation unit 312 performs prediction processing using supplied information. In step S307, the computing unit 305 adds a prediction image generated in step S306 to the difference image information obtained through the inverse orthogonal transform in step S305. In this way, a reconfigured image is generated.

In step S308, the loop filter 306 appropriately performs loop filter processing including deblocking filter processing, adaptive loop filter processing, and the like on the reconfigured image obtained in step S307.

In step S309, the screen rearrangement buffer 307 rearranges a decoded image generated through the filter processing in step S308. In other words, the order of frames rearranged for encoding by the screen rearrangement buffer 102 of the image encoding device 100 is rearranged in the original display order.

In step S310, the D/A conversion unit 308 D/A-converts the decoded image whose order of frames has been rearranged. The decoded image is output to a display not shown in the drawing, and is displayed.

In step S311, the decoded picture buffer 309 stores the decoded image obtained through the filter processing in step S307. The decoded image is used as a reference image in inter prediction processing.

When the processing of step S311 is finished, the decoding processing is finished.

In the prediction processing (in particular, the AMVP mode of inter prediction processing) in step S306 of the encoding processing described above, AMVP list generation processing is executed. The AMVP list generation processing is executed in the same way as the AMVP list generation processing in the image encoding device 100 that has been described with reference to the flowcharts of FIG. 6 and FIG. 7 in the first embodiment. Therefore, the description that has been made above using the flowcharts of FIG. 6 and FIG. 7 can also be applied to the AMVP list generation processing of the image decoding device 300, and the description of the AMVP list generation processing of the image decoding device 300 will be omitted.

By executing each processing as described above, the image decoding device 300 can reduce the load of decoding, and can also realize improvement in encoding efficiency.

### <3. Third embodiment>

### [Another example of IVMP control]

It has been described above that, when an IVMP use flag is 0, an IVMP candidate vector is set to be not available at all times, but IVMP control is not limited to this example. For example, when an IVMP use flag is 0, a predetermined value may be added to an AMVP list (as a candidate vector) instead of an IVMP candidate vector.

The predetermined value can be set to an arbitrary value, and may be set to, for example, the representative value of a motion vector or a parallax vector. As the representative value, an arbitrary value can be used. For example, a global motion vector or a global parallax vector that is a global (in predetermined units of, for example, sequences, pictures, slices, LCUs, CUs, or the like) representative vector may be used. Also, a value calculated by a predetermined operation, for example, an average in a picture or the like, may be used.

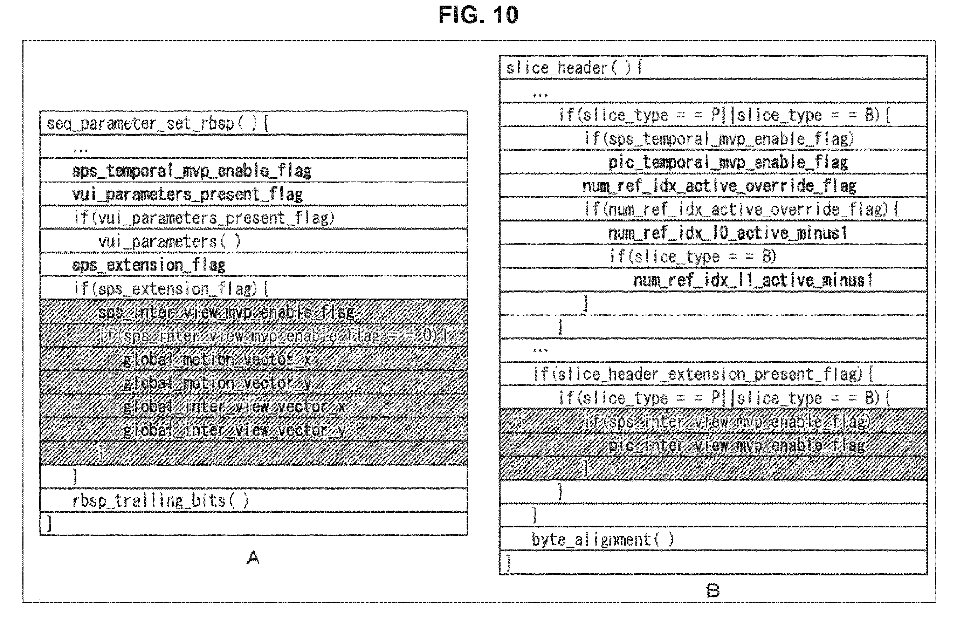

The reversible encoding unit 106 transmits the predetermined value together with the IVMP use flag to the decoding side, so that the decoding side can generate an AMVP list using the same value. A of FIG. 10 shows an example of the syntax of an SPS. For example, as shown in A of FIG. 10, when the value of an IVMP use flag sps_inter_view_mvp_enable_flag is 0, the reversible encoding unit 106 includes not only the IVMP use flag sps_inter_view_mvp_enable_flag but also global motion vectors global_motion_vector_x and global_motion_vector_y and global parallax vectors global_inter_view_vector_x and global_inter_view_vector_y as the predetermined value described above in an SPS, thereby causing the IVMP use flag sps_inter_view_mvp_enable_flag, the global motion vectors global_motion_vector_x and global_motion_vector_y, and the global parallax vectors global_inter_view_vector_x and global_inter_view_vector_y to be transmitted.

In this case, the motion prediction and compensation unit 115 sets the global motion vectors global_motion_vector_x and global_motion_vector_y or the global parallax vectors global_inter_view_vector_x and global_inter_view_vector_y instead of an IVMP candidate vector to index=0 of the AMVP list. Since it is clarified whether or not the vector of a current block is a motion vector or a parallax vector in motion prediction processing, the motion prediction and compensation unit 115 sets a global vector of the same kinds as the vector of the current block to index=0 of the AMVP list.

In the image decoding device 300, the reversible decoding unit 302 acquires the global motion vectors global_motion_vector_x and global_motion_vector_y and the global parallax vectors global_inter_view_vector_x and global_inter_view_vector_y together with the IVMP use flag from the SPS.

The motion compensation unit 312 sets the global motion vectors global_motion_vector_x and global_motion_vector_y or the global parallax vectors global_inter_view_vector_x and global_inter_view_vector_y instead of an IVMP candidate vector to index=0 of an AMVP list. As described above, since it is clarified whether or not the vector of a current block is a motion vector or a parallax vector in the motion prediction processing at the time of encoding, the motion compensation unit 312 sets a global vector of the same kinds as the vector of the current block to index=0 of the AMVP list.

As described above, even in this case, it is possible to control execution of IVMP processing in the same way in both the image encoding device 100 and the image decoding device 300.

Transmission of the predetermined value that is set instead of an IVMP candidate vector as described above can be performed in information on an arbitrary hierarchical level. For example, when an IVMP use flag is transmitted in an SPS and a slice header, the predetermined value may be transmitted in the SPS as shown in FIG. 10. In this case, in the slice header, the IVMP use flag pic_inter_view_mvp_enable_flag is transmitted, whereas the predetermined value is not transmitted, as shown in B of FIG. 10.

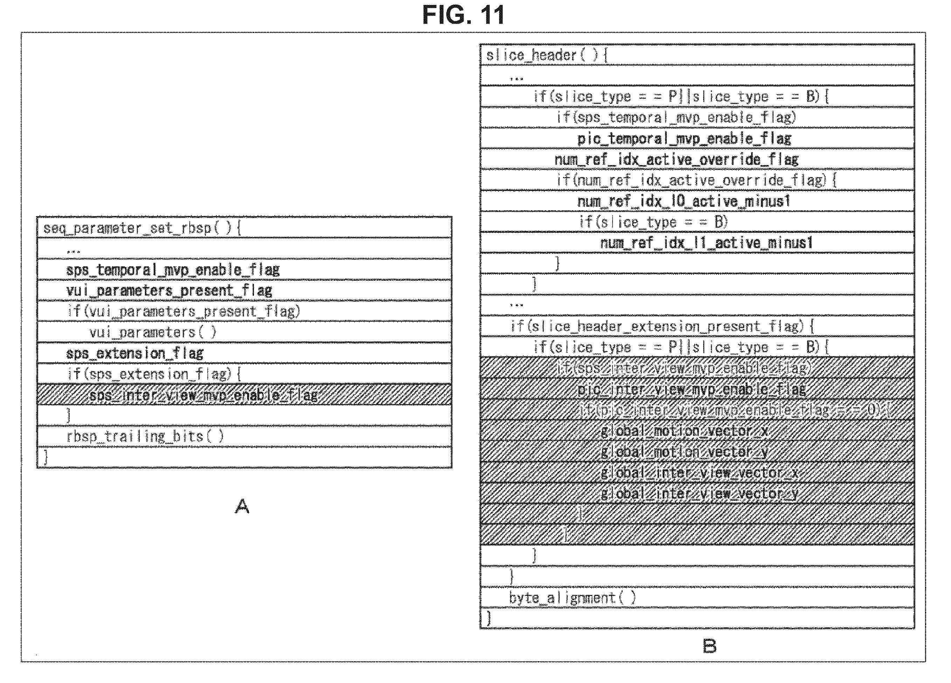

In addition, as an example shown in FIG. 11, a predetermined value that is set instead of an IVMP candidate vector may be transmitted in a slice header. In this case, in an SPS, an IVMP use flag sps_inter_view_mvp_enable_flag is transmitted, but the predetermined value is not transmitted, as shown in A of FIG. 11. Instead, as shown in B of FIG. 11, when an IVMP use flag pic_inter_view_mvp_enable_flag is 0, the predetermined value is transmitted in a slice header.

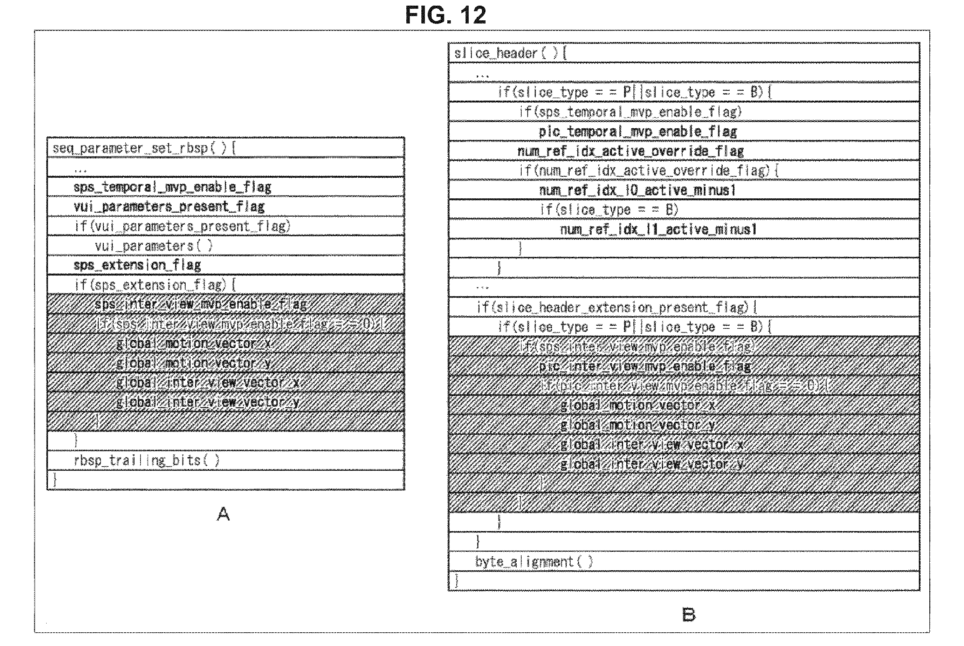

Further, as an example shown in FIG. 12, a predetermined value that is set instead of an IVMP candidate vector may be transmitted at a plurality of hierarchical levels. For example, the predetermined value may be transmitted in both of an SPS and a slice header. In this case, as shown in A of FIG. 12, when an IVMP use flag sps_inter_view_mvp_enable_flag is 0, the predetermined value is transmitted in the SPS. Likewise, as shown in B of FIG. 12, when an IVMP use flag pic_inter_view_mvp_enable_flag is 0, the predetermined value is also transmitted in the slice header.

In this way, even when execution of IVMP processing is controlled for every sequence or execution of IVMP processing is controlled for every slice, it is possible to set a predetermined value instead of an IVMP candidate vector and transmit the value.

Needless to say, the predetermined value may be transmitted using a method other than those described above. For example, control information that indicates not only whether or not to use the IVMP tool but also in which piece of information the predetermined value is transmitted may be used instead of an IVMP use flag.

In addition, sequence units and slice units have been described above as examples, but data units for control are arbitrary as in the cases of the first embodiment and the second embodiment.

In encoding processing, the setting of a predetermined value as described above is performed in the processing of step S101 of FIG. 5.

### [Flow of AMVP list generation processing]

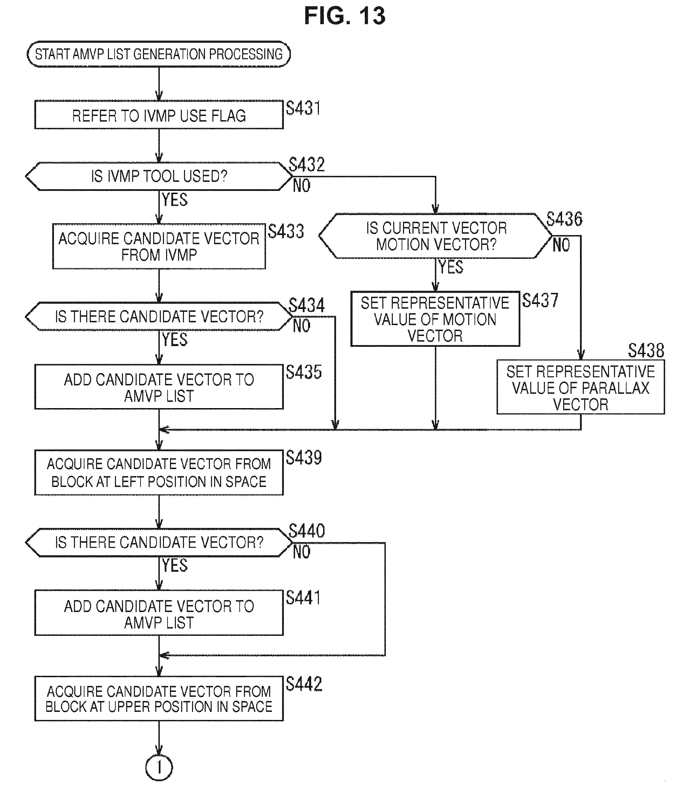

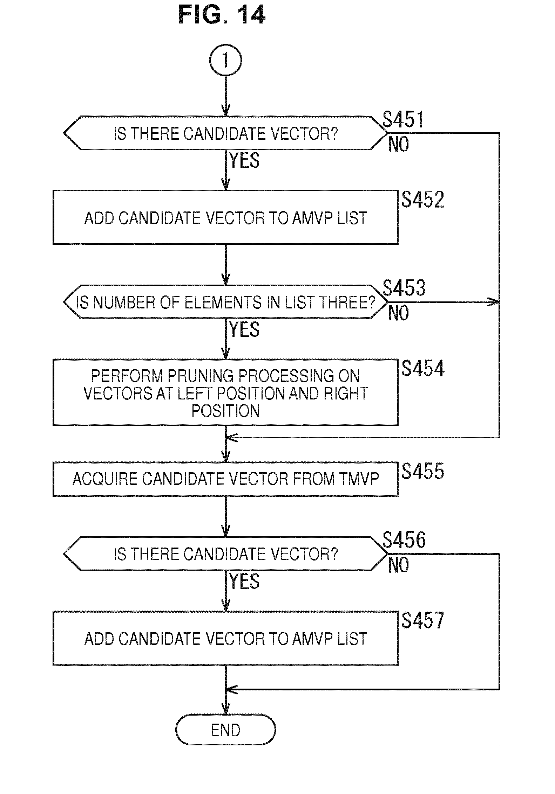

Next, an example of the flow of AMVP list generation processing using a predetermined value set as described above will be described with reference to the flowcharts of FIG. 13 and FIG. 14. As described in the first embodiment and the second embodiment, AMVP list generation processing is performed in the same way in both the image encoding device 100 and the image decoding device 300. A case in which AMVP list generation processing is executed in the image encoding device 100 will be described below.

When AMVP list generation processing is started, in step S431, the motion prediction and compensation unit 115 refers to an IVMP use flag set by the reversible encoding unit 106.

In step S432, the motion prediction and compensation unit 115 determines whether or not to use the IVMP tool based on the value of the IVMP use flag referred to in step S431. For example, when the value of the IVMP use flag is 1 and it is determined to use the IVMP tool, the process proceeds to step S433.

In step S433, the motion prediction and compensation unit 115 performs IVMP processing using the IVMP tool, and acquires a candidate vector according to the IVMP.

In step S434, the motion prediction and compensation unit 115 determines whether or not there is a candidate vector obtained in the processing of step S433 from the IVMP.

When it is determined that there is a candidate vector, the process proceeds step S435. In step S435, the motion prediction and compensation unit 115 adds the candidate vector obtained in the processing of step S433 to index=0 of an AMVP list.

When the processing of step S435 is finished, the process proceeds to step S439. Also, when it is determined in step S434 that there is no candidate vector, the process proceeds to step S439.

When it is determined in step S432 that the value of the IVMP use flag is 0 and it is determined not to use the IVMP tool, the process proceeds to step S436. In step S436, the motion prediction and compensation unit 115 determines whether or not a current vector that is the vector of a current block is a motion vector.

When it is determined that the current vector is a motion vector, the process proceeds to step S437. In step S437, the motion prediction and compensation unit 115 sets the representative value of the motion vector in the AMVP list. When the processing of S437 is finished, the process proceeds to step S439.

When it is determined in step S436 that the current vector is a parallax vector, the process proceeds to step S438. In step S438, the motion prediction and compensation unit 115 sets the representative value of the parallax vector in the AMVP list. When the processing of S438 is finished, the process proceeds to step S439.

The processing of step S439 to step S442 is executed in the same way as the processing of step S137 to step S140 of FIG. 6, respectively. Also, the processing of step S451 to step S457 of FIG. 14 is executed in the same way as the processing of step S151 to step S157 of FIG. 7, respectively.

The motion prediction and compensation unit 115 searches for a prediction vector using the AMVP list generated as described above. In this way, the motion prediction and compensation unit 115 can control execution of IVMP processing according to the value of an IVMP use flag. In other words, by executing each processing as described above, the image encoding device 100 can reduce not only the load of encoding but also the load of decoding, and can also improve encoding efficiency.

Control of execution of IVMP processing has been described above, but, for example, control of use of the vector of a spatially surrounding block and control of use of a TMVP vector may be exerted together. In other words, control of use of each vector may be exerted by one piece of control information (referred to as, for example, overall control information). In this case, based on the overall control information, the image encoding device 100 and the image decoding device 300 can control whether or not to set each of an IVMP vector, the vector of a spatially surrounding block, and a TMVP vector as a candidate vector. Therefore, more adaptive control becomes possible. Also, by integrating control information transmitted from an encoding side to a decoding side with the overall control information, it is possible to improve encoding efficiency compared to the case of separately controlling respective types of vectors.

In addition, the present technology can be applied to an image encoding device and an image decoding device that are used at the time of receiving image information (bit stream) compressed by an orthogonal transform, such as a discrete cosine transform and the like, and motion compensation in such a way as in Moving Picture Experts Group (MPEG), H.26x, or the like, via a network medium, such as satellite broadcasting, cable television, the Internet, or a mobile phone. In addition, the present technology can be applied to an image encoding device and an image decoding device used at the time of performing processing on storage media, such as optical discs, magnetic disks and a flash memory. Further, the present technology can also be applied to a motion prediction and compensation device included in these image encoding device and image decoding device.

### <4. Fourth Embodiment>

### [Computer]

The series of processes described above can be executed by hardware but can also be executed by software. When the series of processes is executed by software, a program that constructs such software is installed into a computer. Here, the expression "computer" includes a computer in which dedicated hardware is incorporated and a general-purpose personal computer or the like that is capable of executing various functions when various programs are installed.

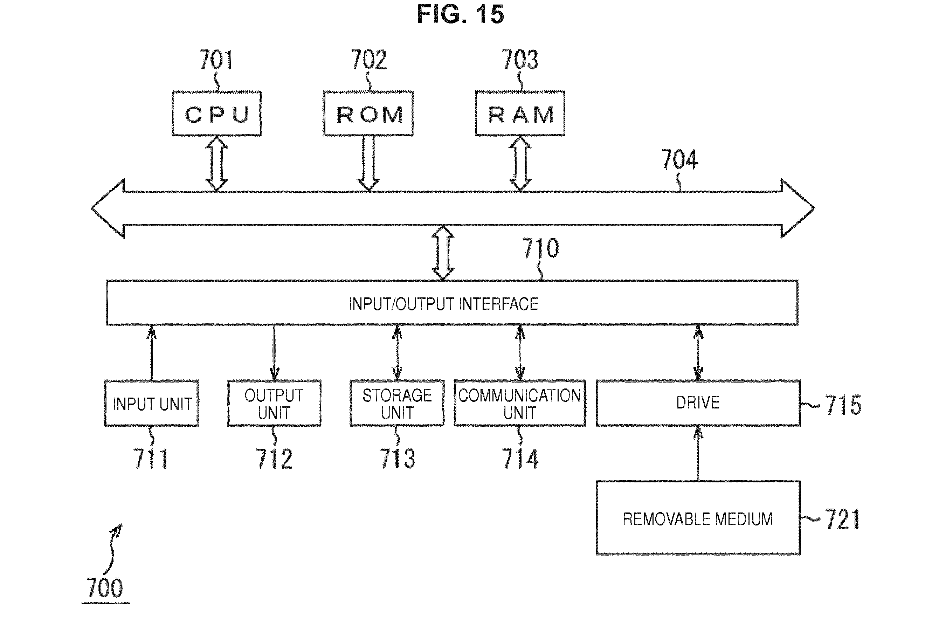

In FIG. 15, a central processing unit (CPU) 701 of the computer 700 executes various processes according to a program stored in a read only memory (ROM) 702 or a program loaded from a storage unit 713 to a random access memory (RAM) 703. In the RAM 703, data that is necessary for executing the various processes by the CPU 701 is appropriately stored.

The CPU 701, the ROM 702 and the RAM 703 are mutually connected via a bus 704. An input output (I/O) interface 710 is also connected to the bus 704.

An input unit 711 that includes a keyboard, a mouse or the like, an output unit 712 that includes a display composed of a cathode ray tube (CRT), a liquid crystal display (LCD) and a speaker, a storage unit 713 that is configured using a hard disk, and a communication unit 714 that is configured using a modem are connected to the input/output interface 710. The communication unit 714 executes communication processing through a network including the Internet.

A drive 715 is connected to the input/output interface 710 according to necessity, removable medium 721 such as a magnetic disk, an optical disc, a magneto optical disc, or a semiconductor memory are appropriately mounted, and a computer program that is read from the removable medium 721 is installed in the storage unit 713 according to necessity.

In the case where the above-described series of processing is performed based on software, the program included in the software is installed over a network or from a recording medium.

The recording medium that includes this type of program is not only formed by the removable medium 721 that is distributed separately from a main body of the device as shown in FIG. 15 in order to distribute the user with the program, but is also formed by the ROM 702 in which the program is recorded and which is provided to the user in a state in which it is incorporated in advance in the main body of the device, the hard disk included in the storage unit 713, or the like. The removable medium 111 is formed by a magnetic disk (including a flexible disk) in which the program is recorded, an optical disk (including a compact disk-read only memory (CD-ROM) and a digital versatile disk (DVD)), a magneto optical disk (including a mini-disk (MD)), a semiconductor memory, or the like.

It should be noted that the program executed by a computer may be a program that is processed in time series according to the sequence described in this specification or a program that is processed in parallel or at necessary timing such as upon calling.

It should be also noted that, in this specification, the steps describing the program stored in the recording medium include not only a process performed in time series according to the sequence shown therein but also a process executed in parallel or individually, not necessarily performed in time series.

Further, in the present disclosure, a system has the meaning of a set of a plurality of configured elements (such as an apparatus or a module (part)), and does not take into account whether or not all the configured elements are in the same casing. Therefore, the system may be either a plurality of apparatuses, stored in separate casings and connected through a network, or a plurality of modules within a single casing.

Further, an element described as a single device (or processing unit) above may be divided to be configured as a plurality of devices (or processing units). On the contrary, elements described as a plurality of devices (or processing units) above may be configured collectively as a single device (or processing unit). Further, an element other than those described above may be added to each device (or processing unit). Furthermore, a part of an element of a given device (or processing unit) may be included in an element of another device (or another processing unit) as long as the configuration or operation of the system as a whole is substantially the same.

The preferred embodiments of the present invention have been described above with reference to the accompanying drawings, whilst the present invention is not limited to the above examples, of course. A person skilled in the art may find various alterations and modifications within the scope of the appended claims, and it should be understood that they will naturally come under the technical scope of the present invention.

For example, the present disclosure can adopt a configuration of cloud computing which processes by allocating and connecting one function by a plurality of apparatuses through a network.

Further, each step described by the above mentioned flow charts can be executed by one apparatus or by allocating a plurality of apparatuses.

In addition, in the case where a plurality of processes is included in one step, the plurality of processes included in this one step can be executed by one apparatus or by allocating a plurality of apparatuses.

### <5. Example Application>

The image encoding device and the image decoding device according to the embodiment described above may be applied to various electronic appliances such as a transmitter and a receiver for satellite broadcasting, cable broadcasting such as cable TV, distribution on the Internet, distribution to terminals via cellular communication, and the like, a recording device that records images in a medium such as an optical disc, a magnetic disk or a flash memory, a reproduction device that reproduces images from such storage medium, and the like. Four example applications will be described below.

### [First application example: Television receiver]

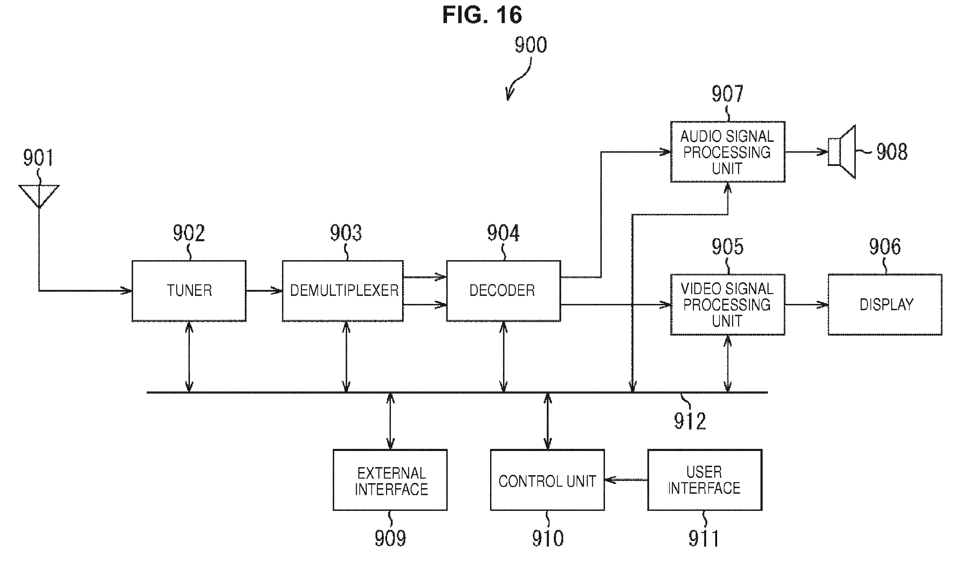

FIG. 16 is a diagram illustrating an example of a schematic configuration of a television device applying the aforementioned embodiment. A television device 900 includes an antenna 901, a tuner 902, a demultiplexer 903, a decoder 904, a video signal processing unit 905, a display 906, an audio signal processing unit 907, a speaker 908, an external interface 909, a control unit 910, a user interface 911, and a bus 912.

The tuner 902 extracts a signal of a desired channel from a broadcast signal received through the antenna 901 and demodulates the extracted signal. The tuner 902 then outputs an encoded bit stream obtained by the demodulation to the demultiplexer 903. That is, the tuner 902 has a role as a transmission unit receiving the encoded stream in which an image is encoded, in the television device 900.

The demultiplexer 903 isolates a video stream and an audio stream in a program to be viewed from the encoded bit stream and outputs each of the isolated streams to the decoder 904. The demultiplexer 903 also extracts auxiliary data such as an EPG (Electronic Program Guide) from the encoded bit stream and supplies the extracted data to the control unit 910. Here, the demultiplexer 903 may descramble the encoded bit stream when it is scrambled.

The decoder 904 decodes the video stream and the audio stream that are input from the demultiplexer 903. The decoder 904 then outputs video data generated by the decoding process to the video signal processing unit 905. Furthermore, the decoder 904 outputs audio data generated by the decoding process to the audio signal processing unit 907.

The video signal processing unit 905 reproduces the video data input from the decoder 904 and displays the video on the display 906. The video signal processing unit 905 may also display an application screen supplied through the network on the display 906. The video signal processing unit 905 may further perform an additional process such as noise reduction on the video data according to the setting. Furthermore, the video signal processing unit 905 may generate an image of a GUI (Graphical User Interface) such as a menu, a button, or a cursor and superpose the generated image onto the output image.

The display 906 is driven by a drive signal supplied from the video signal processing unit 905 and displays video or an image on a video screen of a display device (such as a liquid crystal display, a plasma display, or an OELD (Organic ElectroLuminescence Display)).

The audio signal processing unit 907 performs a reproducing process such as D/A conversion and amplification on the audio data input from the decoder 904 and outputs the audio from the speaker 908. The audio signal processing unit 907 may also perform an additional process such as noise reduction on the audio data.

The external interface 909 is an interface that connects the television device 900 with an external device or a network. For example, the decoder 904 may decode a video stream or an audio stream received through the external interface 909. This means that the external interface 909 also has a role as the transmission unit receiving the encoded stream in which an image is encoded, in the television device 900.

The control unit 910 includes a processor such as a Central Processing Unit (CPU) and a memory such as a RAM and a ROM. The memory stores a program executed by the CPU, program data, EPG data, and data acquired through the network. The program stored in the memory is read by the CPU at the start-up of the television device 900 and executed, for example. By executing the program, the CPU controls the operation of the television device 900 in accordance with an operation signal that is input from the user interface 911, for example.

The user interface 911 is connected to the control unit 910. The user interface 911 includes a button and a switch for a user to operate the television device 900 as well as a reception part which receives a remote control signal, for example. The user interface 911 detects a user operation through these components, generates the operation signal, and outputs the generated operation signal to the control unit 910.

The bus 912 mutually connects the tuner 902, the demultiplexer 903, the decoder 904, the video signal processing unit 905, the audio signal processing unit 907, the external interface 909, and the control unit 910.

In the television device 900 having such a configuration, the decoder 904 has a function of the image decoding device according to the above-described embodiment. Accordingly, at the time of image decoding in the television device 900, it is possible to realize the prevention of degradation of encoding efficiency and a reduction in load.

### [Second application example: Mobile telephone]

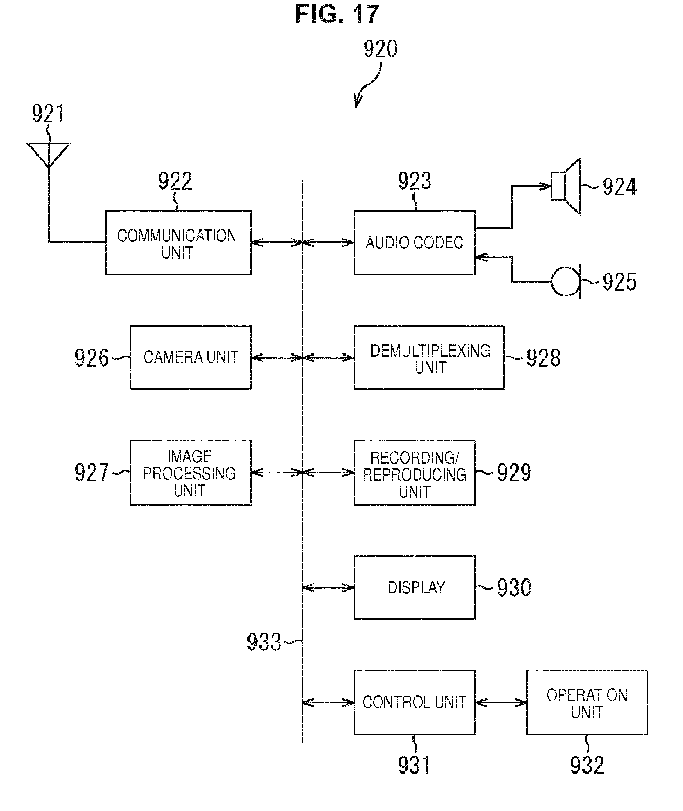

FIG. 17 is a diagram illustrating an example of a schematic configuration of a mobile telephone applying the aforementioned embodiment. A mobile telephone 920 includes an antenna 921, a communication unit 922, an audio codec 923, a speaker 924, a microphone 925, a camera unit 926, an image processing unit 927, a demultiplexing unit 928, a recording/reproducing unit 929, a display 930, a control unit 931, an operation unit 932, and a bus 933.

The antenna 921 is connected to the communication unit 922. The speaker 924 and the microphone 925 are connected to the audio codec 923. The operation unit 932 is connected to the control unit 931. The bus 933 mutually connects the communication unit 922, the audio codec 923, the camera unit 926, the image processing unit 927, the demultiplexing unit 928, the recording/reproducing unit 929, the display 930, and the control unit 931.

The mobile telephone 920 performs an operation such as transmitting/receiving an audio signal, transmitting/receiving an electronic mail or image data, imaging an image, or recording data in various operation modes including an audio call mode, a data communication mode, a photography mode, and a videophone mode.

In the audio call mode, an analog audio signal generated by the microphone 925 is supplied to the audio codec 923. The audio codec 923 then converts the analog audio signal into audio data, performs A/D conversion on the converted audio data, and compresses the data. The audio codec 923 thereafter outputs the compressed audio data to the communication unit 922. The communication unit 922 encodes and modulates the audio data to generate a transmission signal. The communication unit 922 then transmits the generated transmission signal to a base station (not shown) through the antenna 921. Furthermore, the communication unit 922 amplifies a radio signal received through the antenna 921, converts a frequency of the signal, and acquires a reception signal. The communication unit 922 thereafter demodulates and decodes the reception signal to generate the audio data and output the generated audio data to the audio codec 923. The audio codec 923 expands the audio data, performs D/A conversion on the data, and generates the analog audio signal. The audio codec 923 then outputs the audio by supplying the generated audio signal to the speaker 924.

In the data communication mode, for example, the control unit 931 generates character data configuring an electronic mail, in accordance with a user operation through the operation unit 932. The control unit 931 further displays a character on the display 930. Moreover, the control unit 931 generates electronic mail data in accordance with a transmission instruction from a user through the operation unit 932 and outputs the generated electronic mail data to the communication unit 922. The communication unit 922 encodes and modulates the electronic mail data to generate a transmission signal. Then, the communication unit 922 transmits the generated transmission signal to the base station (not shown) through the antenna 921. The communication unit 922 further amplifies a radio signal received through the antenna 921, converts a frequency of the signal, and acquires a reception signal. The communication unit 922 thereafter demodulates and decodes the reception signal, restores the electronic mail data, and outputs the restored electronic mail data to the control unit 931. The control unit 931 displays the content of the electronic mail on the display 930 as well as stores the electronic mail data in a storage medium of the recording/reproducing unit 929.

The recording/reproducing unit 929 includes an arbitrary storage medium that is readable and writable. For example, the storage medium may be a built-in storage medium such as a RAM or a flash memory, or may be an externally-mounted storage medium such as a hard disk, a magnetic disk, a magneto-optical disk, an optical disk, a USB (Unallocated Space Bitmap) memory, or a memory card.

In the photography mode, for example, the camera unit 926 images an object, generates image data, and outputs the generated image data to the image processing unit 927. The image processing unit 927 encodes the image data input from the camera unit 926 and stores an encoded stream in the storage medium of the storing/reproducing unit 929.

In the videophone mode, for example, the demultiplexing unit 928 multiplexes a video stream encoded by the image processing unit 927 and an audio stream input from the audio codec 923, and outputs the multiplexed stream to the communication unit 922. The communication unit 922 encodes and modulates the stream to generate a transmission signal. The communication unit 922 subsequently transmits the generated transmission signal to the base station (not shown) through the antenna 921. Moreover, the communication unit 922 amplifies a radio signal received through the antenna 921, converts a frequency of the signal, and acquires a reception signal. The transmission signal and the reception signal can include an encoded bit stream. Then, the communication unit 922 demodulates and decodes the reception signal to restore the stream, and outputs the restored stream to the demultiplexing unit 928. The demultiplexing unit 928 isolates the video stream and the audio stream from the input stream and outputs the video stream and the audio stream to the image processing unit 927 and the audio codec 923, respectively. The image processing unit 927 decodes the video stream to generate video data. The video data is then supplied to the display 930, which displays a series of images. The audio codec 923 expands and performs D/A conversion on the audio stream to generate an analog audio signal. The audio codec 923 then supplies the generated audio signal to the speaker 924 to output the audio.

The image processing unit 927 in the mobile telephone 920 configured in the aforementioned manner has a function of the image encoding device and the image decoding device according to the aforementioned embodiment. Accordingly, at the time of image encoding and decoding in the mobile telephone 920, it is possible to reduce load and prevent degradation of encoding efficiency.

### [Third application example: Storing/Reproducing unit]

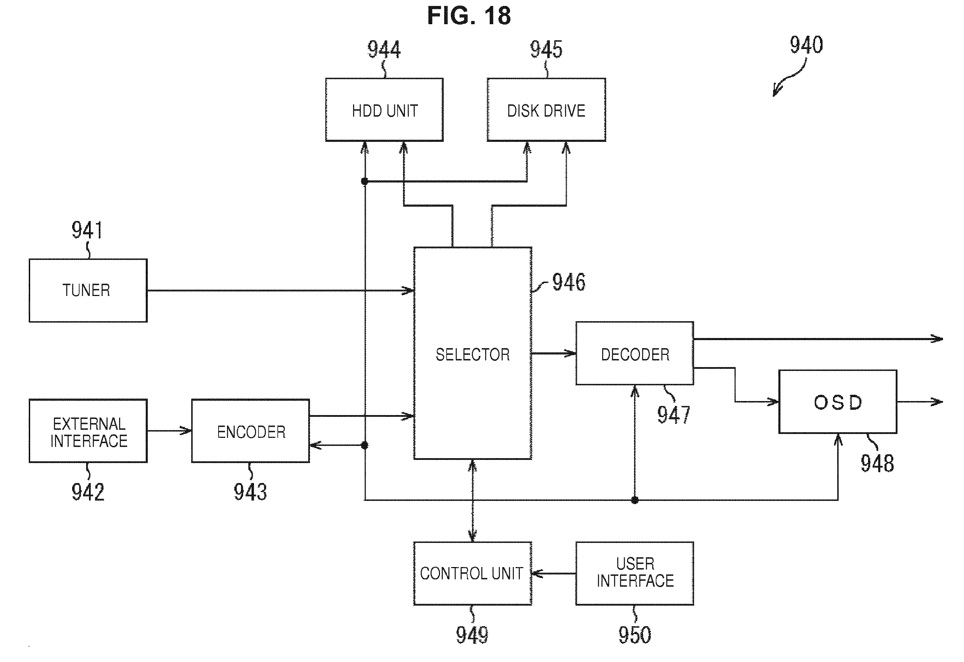

FIG. 18 is a diagram illustrating an example of a schematic configuration of a recording/reproducing device applying the aforementioned embodiment. A recording/reproducing device 940 encodes audio data and video data of a broadcast program received and records the data into a recording medium, for example. The recording/reproducing device 940 may also encode audio data and video data acquired from another device and record the data into the recording medium, for example. In response to a user instruction, for example, the recording/reproducing device 940 reproduces the data recorded in the recording medium on a monitor and a speaker. The recording/reproducing device 940 at this time decodes the audio data and the video data.

The recording/reproducing device 940 includes a tuner 941, an external interface 942, an encoder 943, an HDD (Hard Disk Drive) 944, a disk drive 945, a selector 946, a decoder 947, an OSD (On-Screen Display) 948, a control unit 949, and a user interface 950.

The tuner 941 extracts a signal of a desired channel from a broadcast signal received through an antenna (not shown) and demodulates the extracted signal. The tuner 941 then outputs an encoded bit stream obtained by the demodulation to the selector 946. That is, the tuner 941 has a role as a transmission unit in the recording/reproducing device 940.

The external interface 942 is an interface which connects the recording/reproducing device 940 with an external device or a network. The external interface 942 may be, for example, an IEEE 1394 interface, a network interface, a USB interface, or a flash memory interface. The video data and the audio data received through the external interface 942 are input to the encoder 943, for example. That is, the external interface 942 has a role as a transmission unit in the recording/reproducing device 940.

The encoder 943 encodes the video data and the audio data when the video data and the audio data input from the external interface 942 are not encoded. The encoder 943 thereafter outputs an encoded bit stream to the selector 946.

The HDD 944 records, into an internal hard disk, the encoded bit stream in which content data such as video and audio is compressed, various programs, and other data. The HDD 944 reads these data from the hard disk when reproducing the video and the audio.

The disk drive 945 records and reads data into/from a recording medium which is mounted to the disk drive. The recording medium mounted to the disk drive 945 may be, for example, a DVD disk (such as DVD-Video, DVD-RAM, DVD-R, DVD-RW, DVD+R, or DVD+RW) or a Blu-ray (Registered Trademark) disk.

The selector 946 selects the encoded bit stream input from the tuner 941 or the encoder 943 when recording the video and audio, and outputs the selected encoded bit stream to the HDD 944 or the disk drive 945. When reproducing the video and audio, on the other hand, the selector 946 outputs the encoded bit stream input from the HDD 944 or the disk drive 945 to the decoder 947.

The decoder 947 decodes the encoded bit stream to generate the video data and the audio data. The decoder 904 then outputs the generated video data to the OSD 948 and the generated audio data to an external speaker.

The OSD 948 reproduces the video data input from the decoder 947 and displays the video. The OSD 948 may also superpose an image of a GUI such as a menu, a button, or a cursor onto the video displayed.

The control unit 949 includes a processor such as a CPU and a memory such as a RAM and a ROM. The memory stores a program executed by the CPU as well as program data. The program stored in the memory is read by the CPU at the start-up of the recording/reproducing device 940 and executed, for example. By executing the program, the CPU controls the operation of the recording/reproducing device 940 in accordance with an operation signal that is input from the user interface 950, for example.

The user interface 950 is connected to the control unit 949. The user interface 950 includes a button and a switch for a user to operate the recording/reproducing device 940 as well as a reception part which receives a remote control signal, for example. The user interface 950 detects a user operation through these components, generates the operation signal, and outputs the generated operation signal to the control unit 949.

The encoder 943 in the recording/reproducing device 940 configured in the aforementioned manner has a function of the image encoding device according to the aforementioned embodiment. On the other hand, the decoder 947 has a function of the image decoding device according to the aforementioned embodiment. Accordingly, at the time of image encoding and decoding in the recording/reproducing device 940, it is possible to reduce load and prevent degradation of encoding efficiency.

### [Fourth application example: Image capturing device]

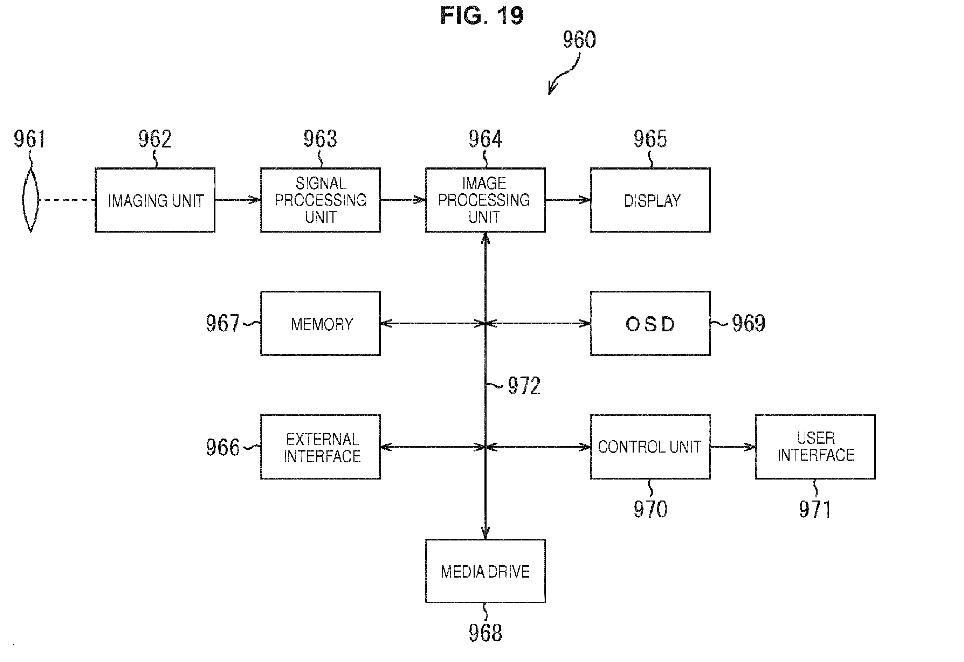

FIG. 19 shows an example of a schematic configuration of an image capturing device applying the aforementioned embodiment. An imaging device 960 images an object, generates an image, encodes image data, and records the data into a recording medium.

The imaging device 960 includes an optical block 961, an imaging unit 962, a signal processing unit 963, an image processing unit 964, a display 965, an external interface 966, a memory 967, a media drive 968, an OSD 969, a control unit 970, a user interface 971, and a bus 972.

The optical block 961 is connected to the imaging unit 962. The imaging unit 962 is connected to the signal processing unit 963. The display 965 is connected to the image processing unit 964. The user interface 971 is connected to the control unit 970. The bus 972 mutually connects the image processing unit 964, the external interface 966, the memory 967, the media drive 968, the OSD 969, and the control unit 970.

The optical block 961 includes a focus lens and a diaphragm mechanism. The optical block 961 forms an optical image of the object on an imaging surface of the imaging unit 962. The imaging unit 962 includes an image sensor such as a CCD (Charge Coupled Device) or a CMOS (Complementary Metal Oxide Semiconductor) and performs photoelectric conversion to convert the optical image formed on the imaging surface into an image signal as an electric signal. Subsequently, the imaging unit 962 outputs the image signal to the signal processing unit 963.

The signal processing unit 963 performs various camera signal processes such as a knee correction, a gamma correction and a color correction on the image signal input from the imaging unit 962. The signal processing unit 963 outputs the image data, on which the camera signal process has been performed, to the image processing unit 964.

The image processing unit 964 encodes the image data input from the signal processing unit 963 and generates the encoded data. The image processing unit 964 then outputs the generated encoded data to the external interface 966 or the media drive 968. The image processing unit 964 also decodes the encoded data input from the external interface 966 or the media drive 968 to generate image data. The image processing unit 964 then outputs the generated image data to the display 965. Moreover, the image processing unit 964 may output to the display 965 the image data input from the signal processing unit 963 to display the image. Furthermore, the image processing unit 964 may superpose display data acquired from the OSD 969 onto the image that is output on the display 965.

The OSD 969 generates an image of a GUI such as a menu, a button, or a cursor and outputs the generated image to the image processing unit 964.

The external interface 966 is configured as a USB input/output terminal, for example. The external interface 966 connects the imaging device 960 with a printer when printing an image, for example. Moreover, a drive is connected to the external interface 966 as needed. A removable medium such as a magnetic disk or an optical disk is mounted to the drive, for example, so that a program read from the removable medium can be installed to the imaging device 960. The external interface 966 may also be configured as a network interface that is connected to a network such as a LAN or the Internet. That is, the external interface 966 has a role as a transmission unit in the imaging device 960.

The recording medium mounted to the media drive 968 may be an arbitrary removable medium that is readable and writable such as a magnetic disk, a magneto-optical disk, an optical disk, or a semiconductor memory. Furthermore, the recording medium may be fixedly mounted to the media drive 968 so that a non-transportable storage unit such as a built-in hard disk drive or an SSD (Solid State Drive) is configured, for example.

The control unit 970 includes a processor such as a CPU and a memory such as a RAM and a ROM. The memory stores a program executed by the CPU as well as program data. The program stored in the memory is read by the CPU at the start-up of the imaging device 960 and then executed. By executing the program, the CPU controls the operation of the imaging device 960 in accordance with an operation signal that is input from the user interface 971, for example.

The user interface 971 is connected to the control unit 970. The user interface 971 includes a button and a switch for a user to operate the imaging device 960, for example. The user interface 971 detects a user operation through these components, generates the operation signal, and outputs the generated operation signal to the control unit 970.

The image processing unit 964 in the imaging device 960 configured in the aforementioned manner has a function of the image encoding device 10 and the image decoding device 60 according to the aforementioned embodiment. Accordingly, at the time of image encoding and decoding in the imaging device 960, it is possible to reduce load and prevent degradation of encoding efficiency.

Described herein is the example where the various pieces of information such as an IVMP use flag and the representative value of a vector are multiplexed to the header of the encoded stream and transmitted from the encoding side to the decoding side. The method of transmitting these pieces of information however is not limited to such example. For example, these pieces of information may be transmitted or recorded as separate data associated with the encoded bit stream without being multiplexed to the encoded bit stream. Here, the term "association" means to allow the image included in the bit stream (may be a part of the image such as a slice or a block) and the information corresponding to the current image to establish a link when decoding. Namely, the information may be transmitted on a different transmission path from the image (or the bit stream). The information may also be recorded in a different recording medium (or a different recording area in the same recording medium) from the image (or the bit stream). Furthermore, the information and the image (or the bit stream) may be associated with each other by an arbitrary unit such as a plurality of frames, one frame, or a portion within a frame.

The preferred embodiments of the present disclosure have been described above with reference to the accompanying drawings, whilst the present disclosure is not limited to the above examples, of course. A person skilled in the art may find various alternations and modifications within the scope of the appended claims, and it should be understood that they will naturally come under the technical scope of the present disclosure.

Additionally, the present technology may also be configured as below.
(1) An image processing device including:
   a control information setting unit configured to set control information for controlling whether or not to use a vector of a base view as a candidate for a prediction vector of a dependent view in motion prediction at a time of encoding a multi-view image;
   an inter-view motion prediction (IVMP) processing unit configured to perform IVMP processing for setting the vector of the base view as a candidate for a prediction vector of a current block of the dependent view when the vector of the base view is set to be used as a candidate for the prediction vector of the dependent view according to the control information set by the control information setting unit;
   a list generation unit configured to generate a list of candidates for the prediction vector of the current block, and when there is a candidate generated by the IVMP processing unit and including the vector of the base view, add the candidate to the list; and
   a transmission unit configured to transmit the control information set by the control information setting unit.
(2) The image processing device according to (1), further including:
   an unavailability setting unit configured to set the vector of the base view to be not available as the prediction vector of the dependent view when the vector of the base view is set not to be used as a candidate for the prediction vector of the dependent view according to the control information set by the control information setting unit.
(3) The image processing device according to (1) or (2), further including:
   a value setting unit configured to set a predetermined value instead of the candidate including the vector of the base view in the list when the vector of the base view is set not to be used as a candidate for the prediction vector of the dependent view according to the control information set by the control information setting unit.
(4) The image processing device according to (3),
   wherein, when a current vector of the current block is a motion vector, the value setting unit sets a representative value of the motion vector instead of the candidate including the vector of the base view in the list.
(5) The image processing device according to (3) or (4),
   wherein, when a current vector of the current block is a parallax vector, the value setting unit sets a representative value of the parallax vector instead of the candidate including the vector of the base view in the list.
(6) The image processing device according to any one of (3) to (5),
   wherein the transmission unit further transmits the predetermined value set by the value setting unit.
(7) The image processing device according to any one of (1) to (6),
   wherein the control information setting unit sets the control information for every predetermined data unit, and
   wherein the transmission unit transmits the control information in information corresponding to the predetermined data unit.
(8) The image processing device according to (7),
   wherein the control information setting unit sets the control information for every sequence or every slice, and
   wherein the transmission unit transmits the control information in a sequence parameter set or a slice header.
(9) The image processing device according to any one of (1) to (8),
   wherein the control information setting unit sets the control information for each of a plurality of levels of hierarchized data units, and
   wherein the transmission unit transmits the control information in information corresponding to the respective hierarchical levels for which the control information has been set.
(10) The image processing device according to (9),
   wherein the control information setting unit sets the control information for every sequence and every slice, and
   wherein the transmission unit transmits the control information in a sequence parameter set and a slice header.
(11) An image processing method in an information processing method of an information processing device, the image processing method including:
   setting, by the information processing device, control information for controlling whether or not to use a vector of a base view as a candidate for a prediction vector of a dependent view in motion prediction at a time of encoding a multi-view image;
   performing, by the information processing device, inter-view motion prediction (IVMP) processing for setting the vector of the base view as a candidate for a prediction vector of a current block of the dependent view when the vector of the base view is set to be used as a candidate for the prediction vector of the dependent view according to the set control information;
   generating, by the information processing device, a list of candidates for the prediction vector of the current block, and when there is a candidate including the vector of the base view, adding the candidate to the list; and
   transmitting, by the information processing device, the set control information.
(12) An image processing device including:
   a control information acquisition unit configured to acquire control information for controlling whether or not to use a vector of a base view as a candidate for a prediction vector of a dependent view in motion prediction at a time of decoding a multi-view image;
   an inter-view motion prediction (IVMP) processing unit configured to perform IVMP processing for setting the vector of the base view as a candidate for a prediction vector of a current block of the dependent view when the vector of the base view is set to be used as a candidate for the prediction vector of the dependent view according to the control information acquired by the control information acquisition unit; and
   a list generation unit configured to generate a list of candidates for the prediction vector of the current block, and when there is a candidate generated by the IVMP processing unit and including the vector of the base view, add the candidate to the list.
(13) The image processing device according to (12), further including:
   an unavailablity setting unit configured to set the vector of the base view to be unavailable as the prediction vector of the dependent view when the vector of the base view is set not to be used as a candidate for the prediction vector of the dependent view according to the control information acquired by the control information acquisition unit.
(14) The image processing device according to (12) or (13), further including:
   a value setting unit configured to set a predetermined value instead of the candidate including the vector of the base view in the list when the vector of the base view is set not to be used as a candidate for the prediction vector of the dependent view according to the control information acquired by the control information acquisition unit.
(15) The image processing device according to (14),
   wherein, when a current vector of the current block is a motion vector, the value setting unit sets a representative value of the motion vector instead of the candidate including the vector of the base view in the list.
(16) The image processing device according to (14) or (15),
   wherein, when a current vector of the current block is a parallax vector, the value setting unit sets a representative value of the parallax vector instead of the candidate including the vector of the base view in the list.
(17) The image processing device according to any one of (14) to (16),
   wherein the control information acquisition unit further acquires the predetermined value, and
   wherein the value setting unit sets the predetermined value acquired by the control information acquisition unit in the list.
(18) The image processing device according to any one of (12) to (17),
   wherein the control information acquisition unit acquires the control information set for every predetermined data unit and transmitted in information corresponding the data unit.
(19) The image processing device according to any one of (12) to (18),
   wherein the control information acquisition unit acquires the control information set for each of a plurality of levels of hierarchized data units and transmitted in information corresponding to the respective hierarchical levels for which the control information has been set.
(20) An image processing method of an image processing device, the image processing method including:
   acquiring, by the image processing device, control information for controlling whether or not to use a vector of a base view as a candidate for a prediction vector of a dependent view in motion prediction at a time of decoding a multi-view image;
   performing, by the image processing device, inter-view motion prediction (IVMP) processing for setting the vector of the base view as a candidate for a prediction vector of a current block of the dependent view when the vector of the base view is set to be used as a candidate for the prediction vector of the dependent view according to the acquired control information; and
   generating, by the image processing device, a list of candidates for the prediction vector of the current block, and when there is a candidate including the vector of the base view, adding the candidate to the list.

### Reference Signs List

- 100: image encoding device
- 106: reversible encoding unit
- 115: motion prediction and compensation unit
- 300: image decoding device
- 302: reversible decoding unit
- 312: motion compensation unit

## Claims

1. An image processing device comprising:
a control information setting unit configured to set control information for controlling whether or not to use a vector of a base view as a candidate for a prediction vector of a dependent view in motion prediction at a time of encoding a multi-view image;
an inter-view motion prediction (IVMP) processing unit configured to perform IVMP processing for setting the vector of the base view as a candidate for a prediction vector of a current block of the dependent view when the vector of the base view is set to be used as a candidate for the prediction vector of the dependent view according to the control information set by the control information setting unit;
a list generation unit configured to generate a list of candidates for the prediction vector of the current block, and when there is a candidate generated by the IVMP processing unit and including the vector of the base view, add the candidate to the list; and
a transmission unit configured to transmit the control information set by the control information setting unit.

2. The image processing device according to claim 1, further comprising:
an unavailability setting unit configured to set the vector of the base view to be not available as the prediction vector of the dependent view when the vector of the base view is set not to be used as a candidate for the prediction vector of the dependent view according to the control information set by the control information setting unit.

3. The image processing device according to claim 1, further comprising:
a value setting unit configured to set a predetermined value instead of the candidate including the vector of the base view in the list when the vector of the base view is set not to be used as a candidate for the prediction vector of the dependent view according to the control information set by the control information setting unit.

4. The image processing device according to claim 3,
wherein, when a current vector of the current block is a motion vector, the value setting unit sets a representative value of the motion vector instead of the candidate including the vector of the base view in the list.

5. The image processing device according to claim 3,
wherein, when a current vector of the current block is a parallax vector, the value setting unit sets a representative value of the parallax vector instead of the candidate including the vector of the base view in the list.

6. The image processing device according to claim 3,
wherein the transmission unit further transmits the predetermined value set by the value setting unit.

7. The image processing device according to claim 1,
wherein the control information setting unit sets the control information for every predetermined data unit, and
wherein the transmission unit transmits the control information in information corresponding to the predetermined data unit.

8. The image processing device according to claim 7,
wherein the control information setting unit sets the control information for every sequence or every slice, and
wherein the transmission unit transmits the control information in a sequence parameter set or a slice header.

9. The image processing device according to claim 1,
wherein the control information setting unit sets the control information for each of a plurality of levels of hierarchized data units, and
wherein the transmission unit transmits the control information in information corresponding to the respective hierarchical levels for which the control information has been set.

10. The image processing device according to claim 9,
wherein the control information setting unit sets the control information for every sequence and every slice, and
wherein the transmission unit transmits the control information in a sequence parameter set and a slice header.

11. An image processing method in an information processing method of an information processing device, the image processing method comprising:
setting, by the information processing device, control information for controlling whether or not to use a vector of a base view as a candidate for a prediction vector of a dependent view in motion prediction at a time of encoding a multi-view image;
performing, by the information processing device, inter-view motion prediction (IVMP) processing for setting the vector of the base view as a candidate for a prediction vector of a current block of the dependent view when the vector of the base view is set to be used as a candidate for the prediction vector of the dependent view according to the set control information;
generating, by the information processing device, a list of candidates for the prediction vector of the current block, and when there is a candidate including the vector of the base view, adding the candidate to the list; and
transmitting, by the information processing device, the set control information.

12. An image processing device comprising:
a control information acquisition unit configured to acquire control information for controlling whether or not to use a vector of a base view as a candidate for a prediction vector of a dependent view in motion prediction at a time of decoding a multi-view image;
an inter-view motion prediction (IVMP) processing unit configured to perform IVMP processing for setting the vector of the base view as a candidate for a prediction vector of a current block of the dependent view when the vector of the base view is set to be used as a candidate for the prediction vector of the dependent view according to the control information acquired by the control information acquisition unit; and
a list generation unit configured to generate a list of candidates for the prediction vector of the current block, and when there is a candidate generated by the IVMP processing unit and including the vector of the base view, add the candidate to the list.

13. The image processing device according to claim 12, further comprising:
an unavailablity setting unit configured to set the vector of the base view to be unavailable as the prediction vector of the dependent view when the vector of the base view is set not to be used as a candidate for the prediction vector of the dependent view according to the control information acquired by the control information acquisition unit.

14. The image processing device according to claim 12, further comprising:
a value setting unit configured to set a predetermined value instead of the candidate including the vector of the base view in the list when the vector of the base view is set not to be used as a candidate for the prediction vector of the dependent view according to the control information acquired by the control information acquisition unit.

15. The image processing device according to claim 14,
wherein, when a current vector of the current block is a motion vector, the value setting unit sets a representative value of the motion vector instead of the candidate including the vector of the base view in the list.

16. The image processing device according to claim 14,
wherein, when a current vector of the current block is a parallax vector, the value setting unit sets a representative value of the parallax vector instead of the candidate including the vector of the base view in the list.

17. The image processing device according to claim 14,
wherein the control information acquisition unit further acquires the predetermined value, and
wherein the value setting unit sets the predetermined value acquired by the control information acquisition unit in the list.

18. The image processing device according to claim 12,
wherein the control information acquisition unit acquires the control information set for every predetermined data unit and transmitted in information corresponding the data unit.

19. The image processing device according to claim 12,
wherein the control information acquisition unit acquires the control information set for each of a plurality of levels of hierarchized data units and transmitted in information corresponding to the respective hierarchical levels for which the control information has been set.

20. An image processing method of an image processing device, the image processing method comprising:
acquiring, by the image processing device, control information for controlling whether or not to use a vector of a base view as a candidate for a prediction vector of a dependent view in motion prediction at a time of decoding a multi-view image;
performing, by the image processing device, inter-view motion prediction (IVMP) processing for setting the vector of the base view as a candidate for a prediction vector of a current block of the dependent view when the vector of the base view is set to be used as a candidate for the prediction vector of the dependent view according to the acquired control information; and
generating, by the image processing device, a list of candidates for the prediction vector of the current block, and when there is a candidate including the vector of the base view, adding the candidate to the list.
